(19) Europäisches Patentamt
European Patent Office
Office européen des brevets

(11) EP 0 684 153 B1

(12) EUROPEAN PATENT SPECIFICATION

(45) Date of publication and mention
of the grant of the patent:
**30.09.1998 Bulletin 1998/40**

(21) Application number: 95902973.7

(22) Date of filing: 16.12.1994

(51) Int. Cl.$^6$: **B60K 23/08**, B60K 17/346

(86) International application number:
**PCT/JP94/02122**

(87) International publication number:
**WO 95/16584 (22.06.1995 Gazette 1995/26)**

(54) **TRANSFER CONSTRUCTION**

AUFBAU EINES VERTEILERGETRIEBES

SYSTEME DE TRANSFERT

(84) Designated Contracting States:
**DE FR GB**

(30) Priority: 16.12.1993 JP 316436/93

(43) Date of publication of application:
**29.11.1995 Bulletin 1995/48**

(73) Proprietor:
**MITSUBISHI JIDOSHA KOGYO KABUSHIKI KAISHA
Tokyo 108 (JP)**

(72) Inventors:
• **SAWASE, Kaoru**
  **33-8, Shiba 5-chome Minato-ku Tokyo 108 (JP)**
• **NIWA, Takahisa**
  **33-8, Shiba 5-chome Minato-ku Tokyo 108 (JP)**

(74) Representative:
**Greenwood, John David et al
Graham Watt & Co.
Riverhead
Sevenoaks Kent TN13 2BN (GB)**

(56) References cited:
**EP-A- 0 528 547**          **DE-A- 2 331 980**
**JP-A- 4 300 729**

**Description**

Technical Field

This invention relates to a transfer construction for distributing drive force to a front-wheel side and a rear-wheel side in a four-wheel drive automotive vehicle, and especially to a transfer construction designed to perform the distribution of drive force by using a planetary gear mechanism.

Background Art

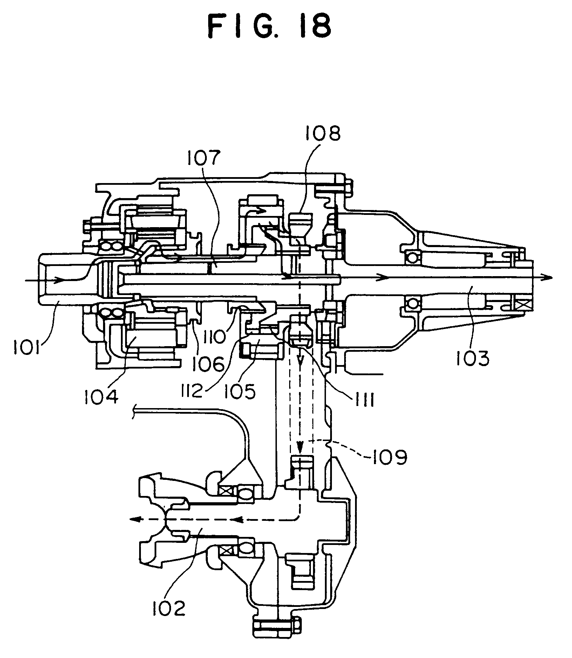

A four-wheel drive vehicle is provided with a transfer for distributing drive force from an engine to a front-wheel side and a rear-wheel side. Conventional transfer constructions include, for example, such a construction as illustrated in FIG. 18. According to this transfer construction, a high/low switching planetary gear 104, which makes up a sub-transmission, and a planetary gear center differential 105 are arranged among an input shaft 101, a front-wheel-side output shaft 102 and a rear-wheel-side output shaft 103 as shown in FIG. 18.

At the high/low switching planetary gear 104, engine torque inputted to the input shaft 101 is switched to high-speed rotation (high) or low-speed rotation (low) depending on ON/OFF of a dog clutch 106 and is then outputted.

At the planetary gear center differential 105, the engine torque which has been set high or low at the high/low switching planetary gear 104 is inputted to its planetary carrier via a shaft 107. This engine torque is outputted on a side to the front-wheel-side output shaft 102 via a pinion gear, a primary sun gear 111, a front drive gear 108 and a transfer chain 109 and on another side to the rear-wheel-side output shaft 103 via a pinion gear and a secondary sun gear 112. Further, the planetary gear center differential 105 is provided with a lock clutch 110 so that a differential motion between front wheels and rear wheels can be completely limited to permit directly-coupled four-wheel drive running.

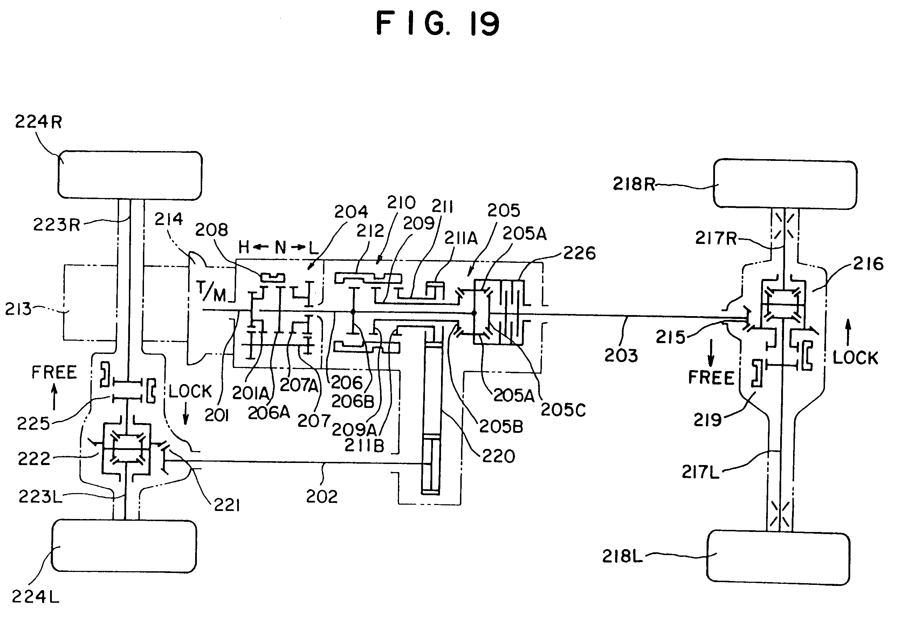

As another conventional transfer construction, there is also such a construction as illustrated by way of example in FIG. 19. In this transfer construction, a high/low switching mechanism 204 as a sub-transmission, a center differential 205, a viscous coupling 226 for limiting differential of said center differential 205, and a shaft 206 coupling said high/low switching mechanism 204 and said center differential 205 are arranged among an input shaft 201, a front-wheel-side output shaft (front propeller shaft) 202 and a rear-wheel-side output shaft (propeller shaft) 203.

Said high/low switching mechanism 204 comprises a gear 201A arranged on an input shaft 201, a gear 206A arranged on said drive force transmitting shaft 206, a gear 207A changeable in speed via a gear arranged on a counter shaft 207 and hence rotatable at a speed lower than said gear 201A arranged on said input shaft 201, and a sleeve 208 arranged for meshing engagement with these gears 201A,206A,207A. By moving said sleeve 208 in an axial direction, it is possible to select a high-speed mode in which said gear 206A is coupled to said gear 201A, a low-speed mode in which said gear 206A is coupled to said gear 207A or a neutral mode in which said sleeve 208 is coupled to said gear 206A alone and is not associated with any of said gears 201A,206A, 207A.

Said center differential 205 is of the bevel gear type, and is provided with said input pinions 205A,205A arranged on a rear end of said drive force transmitting shaft 206 and also with a front-wheel-side output pinion 205B and a rear-wheel-side output pinion 205 C both in meshing engagement with these input pinions 205A,205A. Said front-wheel-side pinion 205B is arranged on a rear end of a hollow shaft 209, and said hollow shaft 209 is connected to a front drive gear 211A via a 2WD/4WD switching mechanism 210. Further, said rear-wheel-side output pinion 205C is arranged on a front end of said rear-wheel-side output shaft 203.

Said 2WD/4WD switching mechanism 210 comprises a gear 206B arranged on an intermediate part of said drive force transmitting shaft 206, a gear 209A arranged on a front end of said hollow shaft 209, a gear 211B arranged on a front end of a hollow shaft 211 with said front drive gear 211A arranged thereon, and a sleeve 212 arranged for meshing engagement with these gears 206B,209A,211B. By moving said sleeve 212 in an axial direction, it is possible to select a two-wheel drive mode (2WD mode) in which said drive force transmitting shaft 206 and said hollow shaft 209 are integrally coupled to each other, a four-wheel drive mode (4WD mode) in which said hollow shaft 209 and said hollow shaft 211 are integrally coupled to each other and front-rear differential is permitted, or a four-wheel drive mode (4WD lock mode) in which said drive force transmitting shaft 206, said hollow shaft 209 and said hollow shaft 211 are integrally coupled together and front-rear differential is completely limited.

As said drive force transmitting shaft 206 and said hollow shaft 209 integrally rotate in said 2WD mode, the differential function of said center differential 205 is not exhibited so that engine torque, which has been transmitted to said drive force transmitting shaft 206 from an engine 213 via a transmission 214 and said high/low switching mechanism 204, is fed in its entirety to said rear-wheel-side output shaft 203 and is transmitted to rear-wheel axles 217L,217R via a bevel gear mechanism 215 and a rear differential 216, whereby rear wheels 218L,218R are driven. Incidentally, numeral 219 indicates a rear differential lock mechanism.

Since said hollow shaft 209 and said hollow shaft 211 integrally rotate in said 4WD mode, the differential function of said center differential 205 is exhibited. Engine torque, which has been transmitted from said engine 213 to said drive force transmitting shaft 206 via said transmission 214 and said high/low switching mechanism 204, is on one side transmitted from said rear-wheel-side output pinion 205C to said rear-wheel-side output shaft 203 and on the other side, is fed from said front-wheel-side output pinion 205B to said front drive gear 211A via said hollow shaft 209, said 2WD/4WD switching mechanism 210 and said hollow shaft 211. Then, the engine torque distributed to said rear-wheel-side output shaft 203 is transmitted through such a route as mentioned above, so that said rear wheels 218L,218R are driven. The engine torque distributed to said front drive gear 211A, on the other hand, is fed to said front-wheel-side output shaft 202 via a transfer chain 220 and then transmitted to front-wheel axles 223L,223R via a bevel gear mechanism 221 and a front differential 222, so that front wheels 224L,224R are driven. Incidentally, designated at 225 is a flywheel mechanism. At this time, a differential motion between said front wheels and said rear wheels is permitted. Depending on the differential motion between said front wheels and said rear wheels, differential limitation by said viscous coupling 226 is however exhibited so that the state of distribution of torque to said front and rear wheels is changed.

Further, said drive force transmitting shaft 206 and said hollow shaft 209 integrally rotate with said hollow shaft 211 in said 4WD lock mode. Said center differential 205 therefore is brought into a locked position, so that engine torque is transmitted on one side to said drive force transmitting shaft 206, said center differential 205 and said rear-wheel-side output shaft 203 and on the other hand to said front drive gear 211A via said drive force transmitting shaft 206, said center differential 205, said hollow shaft 209, said 2WD/4WD changing mechanism 210 and said hollow shaft 211, whereby the engine torque is transferred to said rear wheels 218L,218R and said front wheels 224L,224R through similar routes as those mentioned above. As no differential motion is permitted between said front wheels and said rear wheels at this time, the engine torque is surely transferred to said front and rear wheels.

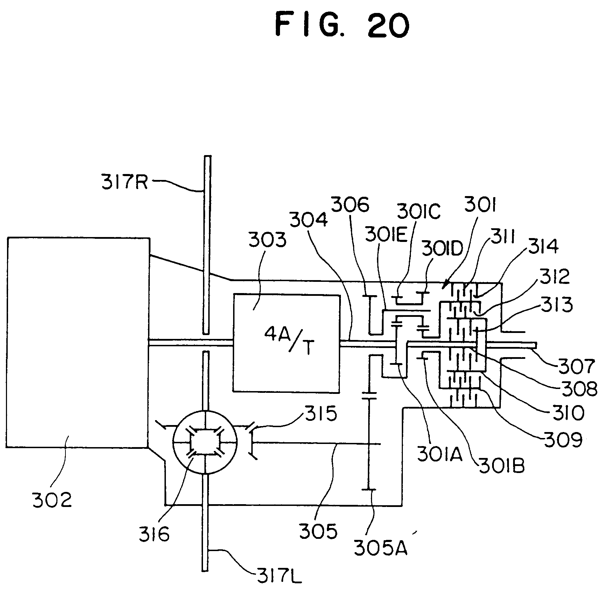

As a further conventional transfer construction, there is also such a construction as shown by way of example in FIG. 20. This transfer 300, as shown in FIG. 20, is arranged at an output portion of a 4-speed automatic transmission 303 connected to an engine 302, and is constructed of a center differential 301, which is equipped with functions of a sub-transmission making use of a compound planetary gear, plural clutches 312,313, and a brake 314.

Said center differential 301 comprises a first element composed of a primary sun gear 301A, a second element composed of a secondary sun gear 301B and a third element composed of a primary pinion gear 301C and secondary pinion gear 301D arranged integrally with each other, all of which are arranged among an input shaft 304 to which engine torque is inputted from said 4-speed automatic transmission 303, a front drive gear 306 arranged in meshing engagement with a gear 305A of a front-wheel-side output shaft 305 and a rear-wheel-side output shaft 307.

Said primary sun gear 301A is coupled for integral rotation to said input shaft 304, said primary pinion gear 301C and said secondary pinion gear 301D are integrally supported for rotation by a planetary carrier 301E and are in meshing engagement with said primary sun gear 301A and said secondary sun gear 301B, respectively. Further, said front drive gear 306 is coupled for integral rotation to said planetary carrier 301E, and said drive force transmitting shaft 308 is coupled to said planetary carrier 301E. On the other hand, a hollow drive force transmitting shaft 309 is coupled to said secondary sun gear 301B.

Between said two drive force transmitting shafts 308 and 309 in the center differential 301, a drive force transmitting shaft 310 coupled to said rear-wheel-side output shaft 307 and a transmission case 311 enclosing said transfer 300, clutches and brakes are interposed, respectively.

Namely, between said drive force transmitting shaft 309 on the side of said center differential 301 and said drive force transmitting shaft 310 on the side of the rear-wheel-side output shaft 307, is interposed said clutch 312 which achieves said 4-wheel drive mode in which engine torque is distributed to said front wheels and said rear wheels. When said clutch 312 engages, said secondary sun gear 301B and said rear-wheel-side output shaft 307 are coupled together so that engine torque inputted from said primary sun gear 301A is transferred from said primary pinion gear 301C to said front drive gear 306 via said planetary carrier 301E. On the other hand, the engine torque is also transferred from said primary pinion gear 301C to said rear-wheel-side output shaft 307 via said secondary pinion gear 301D, said secondary sun gear 301B, said clutch 312 and said drive force transmitting shaft 309. As a result, said four-wheel drive mode in which a differential motion between said front and rear wheels is permitted is achieved. There are also shown a bevel gear mechanism 315, a front differential 316, and front-wheel axles 317L,317R.

In addition, a front-rear differential limiting clutch 313 is interposed between said drive force transmitting shaft 308 on the side of said center differential 301 and said drive force transmitting shaft 310 on the side of the rear-wheel-side output shaft 307. When this front-rear differential limiting clutch 313 engages, said front drive gear 306 and said rear-wheel-side output shaft 307 tend to integrally rotate via said drive force transmitting shaft 308, said clutch 313 and said rear-wheel-side output shaft 307, so that a differential motion between said front and rear wheels is limited.

Between said drive force transmitting shaft 309 on the side of said center differential 301 and said transmission case 311, said brake 314 is interposed. When this brake 314 engages, said secondary sun gear 301B becomes no longer rotatable. The engine torque inputted from said primary sun gear 301A is hence transmitted from said primary pinion gear 301C to the side of said planetary carrier 301E only and moreover, the revolution speed on the side of this planetary carrier 301E becomes greater. Accordingly, said center differential 301 is also designed to function as a sub-transmission which changes rotational torque from said 4-speed automatic transmission 303 to a still higher speed and then outputs. By said center differential 301 as the sub-transmission, it is therefore possible to achieve an overdrive 5th speed which is a higher speed stage than the 4th speed, the fastest speed stage of said 4-speed automatic transmission 303.

Of course, said clutch 312 is made free (released from engagement) when said brake 314 is brought into engagement. If said front-rear differential limiting clutch 313 is made free upon engagement of said brake 314, a front-wheel drive state is established. Engagement of said front-rear differential limiting clutch 313 results in a directly-coupled four-wheel drive state in which a differential motion between said front and rear wheels is limited.

The above-described transfer constructions are however accompanied by problems as will be described below.

In each of the conventional examples illustrated in FIG. 18 and FIG. 19, respectively, said high/low switching sub-transmission and said center differential gear unit are arranged separately so that said transfer becomes large and heavy.

The conventional example shown in FIG. 20, on the other hand, has achieved dimensional and weight reductions of the apparatus through the integrated construction of said sub-transmission and said center differential by making use of a planetary gear mechanism of the 3 element/2 freedom type. According to this construction, however, ordinary four-wheel drive running in which said center differential is in operation while permitting a differential motion between said front and rear wheels is possible only when said brake 314 is made free (released from engagement), in other words, when said sub-transmission is in a low-speed position. Conversely, when said brake 314 is in an engaged position, that is, when said sub-transmission is in a high-speed position, the running mode is limited to the front-wheel drive mode or the directly-coupled four-wheel drive mode.

Incidentally, four-wheel drive vehicles led by off-road vehicles are generally required to achieve a directly-coupled four-wheel drive when the sub-transmission is set in a low-speed position and also to achieve a four-wheel drive with the center differential in operation when the sub-transmission is set in a high-speed position. The conventional example illustrated in FIG. 20 cannot meet this requirement.

With the foregoing problems in view, the present invention has as an object the provision of a transfer construction which, while promoting both dimensional and weight reductions of the transfer portion, is designed to satisfy the requirements for four-wheel drive vehicles that a directly-coupled four-wheel drive can be achieved when a sub-transmission is in a low-speed position but a four-wheel drive with its center differential in operation can be achieved when the sub-transmission is in a high-speed position and also to permit automated switching between a high speed and a low speed and between a two-wheel drive and a four-wheel drive.

Disclosure of the Invention

The present invention has been completed in view of the above-described problems. In a transfer construction having a primary output member for outputting drive force to one of a front-wheel-side rotating member and a rear-wheel-side rotating member and a secondary output member for outputting drive force to the other one of said front-wheel-side rotating member and said rear-wheel-side rotating member, thereby distributing drive force transmitted from an input member to said primary output member and said secondary output member,

said construction is provided with a compound planetary gear mechanism having four rotatable elements capable of serving as drive force transferring elements or reaction force elements; individual ones of said four elements are arranged for couplement to individual ones of four members composed of said input member, said primary output member, said secondary output member and a stationary member, respectively; and said primary output member and said secondary output member are arranged for couplement to each other.

According to said construction, drive force transmitted from said input member is distributed to said primary output member and said secondary output member via the respective elements of said compound planetary gear mechanism. Here, the state of distribution of the drive force to said primary output member and said secondary output member is controlled in accordance with states of coupling between elements of said compound planetary gear mechanism and the individual member of said input member, said primary output member, said secondary output member and said fixing member.

As the functions of a sub-transmission and the function of a center differential can be incorporated in an integral construction through said planetary gear mechanism, the construction can, as its advantage, achieve the requirements for four-wheel drive vehicles, that is, promotion of dimensional and weight reductions of the transfer portion, easy switching between a high speed and a low speed and easy switching between two-wheel drive and four-wheel drive, a directly-coupled four-wheel when a sub-transmission is in a low-speed position, and a four-wheel drive with its center differential in operation when the sub-transmission is in a high-speed position.

JP-A-4-30079 discloses a transfer construction according to the preamble of claim 1. The present invention is characterized by the features of the characterizing portion of claim 1.

As a first specific construction of the above-described compound planetary gear mechanism, it can be constructed of a ring gear, a primary sun gear, a primary pinion gear in meshing engagement with said ring gear, a secondary pinion gear in meshing engagement with said primary pinion gear and said primary sun gear, a secondary sun gear in meshing engagement with said primary pinion gear and a carrier rotatably supporting said primary pinion gear and said secondary pinion gear. In this case, said ring gear, said primary sun gear, said secondary sun gear and said carrier correspond to the above-described four elements.

Desirably, said input member are arranged for couplement to each other, said primary sun gear and said primary output member are arranged for couplement to each other, said secondary sun gear and said stationary member are arranged for couplement to each other, and said carrier and said secondary output member are arranged for couplement to each other.

Engagement members are desirably interposed between said primary sun gear and said primary output member and between said secondary sun gear and said stationary member, respectively.

Said primary output member can be constructed as a front-wheel-side output member provided with a front drive sprocket arranged coaxially with said compound planetary gear mechanism, a front propeller shaft for transferring drive force to a side of front wheels, a front driven sprocket arranged on said front propeller shaft, and a front drive chain coupling said front drive sprocket to said front driven sprocket to permit transfer of power; and said front drive sprocket, said front driven sprocket and said front drive chain can be arranged closer to a rear part of a vehicle than said compound planetary gear mechanism and said engagement members.

Owing such an arrangement, the axial length of said propeller shaft can be extended. This makes it possible, for example, to reduce a bending angle at a connecting part between said front propeller shaft and said associated bevel gear mechanism of said front differential. Rotational vibrations of said front propeller shaft and said bevel gear mechanism can thus be reduced, thereby making it possible to reduce vibrations and noise of a vehicle.

Said engagement members can be composed of wet-type multiplate clutches.

Use of such wet-type multiplate clutches makes it possible to easily adjust engagement of the clutches, for example, by a hydraulic pressure or the like so that switching control of the clutches can be easily achieved. It therefore becomes possible, for example, to perform switching between a high speed and a low speed or switching between two-wheel drive and four-wheel drive in accordance with the state of running of a vehicle without relying upon an instruction from a driver.

Further, said ring gear and said secondary output member can be arranged for couplement to each other, said primary sun gear and said stationary member can be arranged for couplement to each other, said secondary sun gear and said primary output member can be arranged for couplement to each other, and said carrier and said input member can be arranged for couplement to each other.

In this case, engagement members are interposed between secondary sun gear and said primary output member and between said primary sun gear and said stationary member, respectively.

The engagement members in this case can also be composed of wet-type multiplate clutches.

As a second specific construction of the above-described compound planetary gear mechanism, the compound planetary gear mechanism can be composed of a primary planetary gear mechanism comprising three elements composed of a primary ring gear, a primary sun gear, a primary pinion gear in meshing engagement with said primary ring gear and said primary sun gear, and a primary carrier rotatably supporting thereon said primary pinion gear, and a secondary planetary gear mechanism comprising three elements of a secondary ring gear, a secondary sun gear, a secondary pinion gear in meshing engagement with said secondary ring gear and said secondary sun gear, and a secondary carrier rotatably supporting thereon said secondary pinion gear, in which two of said three elements are coupled to two of said three elements composed of said primary planetary gear mechanism, respectively. In this case, individual ones of four elements, which are composed of said mutually coupled two elements, the remaining one element out of said three elements composed of said primary planetary gear mechanism and the remaining one element out of said three elements composed of said secondary planetary gear mechanism, can be arranged for couplement to individual ones of four members composed of said input member, said primary output member, said secondary output member and said stationary member, respectively; and said primary output member and said secondary output member can be arranged for couplement to each other.

In this case, said primary ring gear and said secondary carrier are desirably coupled to each other, and said secondary ring gear and said primary carrier are desirably coupled to each other.

Desirably, said secondary ring gear and said primary carrier are coupled to said input member; and said primary sun gear and said primary output member are arranged for couplement to each other, said secondary sun gear and said stationary member are arranged for couplement to each other, and said primary ring gear and said secondary carrier are arranged for couplement to said secondary output member.

Further, engagement members are interposed between said primary sun gear and said primary output member and between said primary ring gear and said secondary carrier, respectively.

Said engagement members can also be composed of wet-type multiplate clutches in this case.

It is also possible to construct so that said primary ring gear and said secondary sun gear can be coupled to each other, and said primary sun gear and said secondary carrier can be coupled to each other.

In this case, said primary sun gear and said secondary carrier are coupled to said input member; and said primary ring gear and said secondary sun gear are arranged for couplement to said primary output member, said primary carrier and said stationary member are arranged for couplement to each other, and said secondary ring gear and said secondary output member are arranged for couplement to each other.

In this case, it is also desired to interpose engagement members between said secondary ring gear and said secondary output member and between said primary carrier and said stationary member, respectively.

Said engagement member can also be composed of wet-type multiplate clutches in this case.

Further, said primary carrier and said secondary carrier can be coupled to each other, and said primary ring gear and said secondary ring gear can be coupled to each other.

In this case, said primary carrier and said secondary carrier are desirably coupled to said input member; and said secondary sun gear and said primary output member are desirably arranged for couplement to each other, said primary sun gear and said stationary member are desirably arranged for couplement to each other, and said primary ring gear and said secondary ring gear are desirably arranged for couplement to said secondary output member.

Engagement member can desirably be interposed between said primary sun gear and said primary output member and between said secondary sun gear and said stationary member, respectively.

In this case, said engagement member can also be composed of wet-type multiplate clutches.

Further, an engagement member can be interposed between said primary output member and said secondary output member.

In this case, said engagement member can also be composed of a wet-type multiplate clutch.

Moreover, said primary output member can output drive force to said front-wheel-side rotating member, or said primary output member can output drive force to said rear-wheel-side rotating member.

Brief Description of the Drawings

FIG. 1 is a schematic skeleton diagram showing a transfer construction according to a first embodiment of the present invention;

FIG. 2 is a speed diagram schematically illustrating elements of the transfer construction according to said first embodiment of the present invention in combination with additional rotation-limiting means and engagement means;

FIG. 3 is a schematic skeleton diagram showing a drive system of a vehicle equipped with the transfer construction according to the first embodiment of the present invention;

FIG. 4 is a schematic skeleton diagram illustrating a flow of drive force in a high-speed two-wheel drive mode by the transfer construction according to the first embodiment of the present invention;

FIG. 5 is a schematic skeleton diagram depicting a flow of drive force in a high-speed four-wheel drive mode by the transfer construction according to the first embodiment of the present invention;

FIG. 6 is a schematic skeleton diagram showing a flow of drive force in a low-speed two-wheel drive mode by the transfer construction according to the first embodiment of the present invention;

FIG. 7(A) to FIG. 7(C) are speed diagrams illustrating the concept of a transfer construction studied in the course of creation of the first embodiment of the present invention;

FIG. 8(A) to FIG. 8(C) are speed diagrams illustrating advantages of the transfer construction according to the first embodiment of the present invention;

FIG. 9 is a schematic skeleton diagram showing a transfer construction according to a second embodiment of the present invention;

FIG. 10 is a speed diagram schematically illustrating elements of the transfer construction according to said second embodiment of the present invention in combination with additional rotation-limiting means and engagement means;

FIG. 11 is a schematic skeleton diagram showing a transfer construction according to a third embodiment of the present invention;

FIG. 12 is a speed diagram schematically illustrating elements of a transfer construction according to said third embodiment of the present invention in combination with additional rotation-limiting means and engagement means;

FIG. 13 is a schematic skeleton diagram showing a transfer construction according to a fourth embodiment of the present invention;

FIG. 14 is a speed diagram schematically illustrating elements of a transfer construction according to said fourth embodiment of the present invention in combination with additional rotation-limiting means and engagement means;

FIG. 15 is a schematic skeleton diagram showing a transfer construction according to a fifth embodiment of the present invention;

FIG. 16 is a speed diagram schematically illustrating elements of a transfer construction according to said fifth embodiment of the present invention in combination with additional rotation-limiting means and engagement means;

FIG. 17 is a schematic skeleton diagram showing a transfer construction according to a sixth embodiment of the present invention;

FIG. 18 is a schematic diagram showing a conventional transfer construction;

FIG. 19 is a schematic skeleton diagram of a drive system illustrating another conventional transfer construction; and

FIG. 20 is a schematic skeleton diagram illustrating a further conventional transfer construction.

Best Mode for Carrying out the Invention

The embodiments of the present invention will hereinafter be described with reference to the drawings.

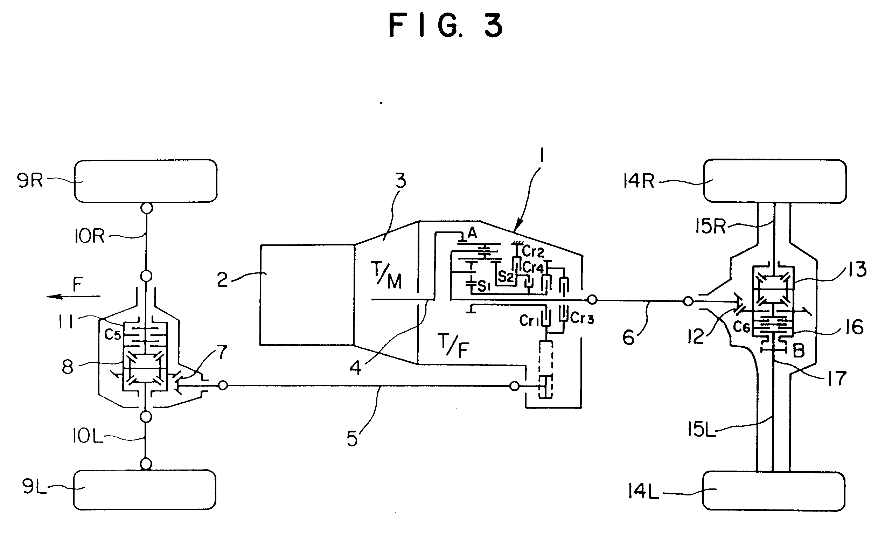

A description will first be made of the first embodiment of the present invention. As is illustrated in FIG. 3, the transfer 1 of this embodiment is arranged among an input member 4 to which output torque (drive force) from an engine 2 is inputted via a transmission 3, a front propeller shaft 5 as a front-wheel-side output member for transmitting the thus-inputted drive force to a side of front wheels and a propeller shaft 6 as a rear-wheel-side output member for transmitting the thus-inputted drive force to a side of rear wheels; and is equipped with both functions as a sub-transmission, which can further change the speed of drive force from said transmission 3 and functions as a center differential permitting a differential motion between said front wheels and said rear wheels. Incidentally, the "input member 4" is a term chosen by taking this transfer as a primary apparatus, and an output shaft itself of said transmission 3 may be taken as said input member 4.

In this vehicle, drive force outputted to said front propeller shaft 5 is transferred to a front differential 8 via a bevel gear mechanism 7 and is then fed to drive axles 10L,10R of left and right front wheels 9L,9R. Said front differential 8 is provided with a differential-limiting mechanism 11. This differential-limiting mechanism 11 can adjust a differential-limiting condition, for example, like a hydraulic multiplate clutch and, while controlling differential limitation, can adjust the capacity of torque to be transmitted.

On the other hand, the drive force outputted to said rear propeller shaft 6 is transferred to a rear differential 13 via a bevel gear mechanism 12 and then fed to drive axles 15L,15R of left and right rear wheels 14L,14R. Incidentally, said rear differential 13 is provided with a differential-limiting mechanism 16 and a differential-lock mechanism 17. This differential-limiting mechanism 16 is also of such a type that a differential-limiting condition can be adjusted, for example, like a hydraulic multiplate clutch and, while controlling a limitation to a differential motion, can adjust the capacity of torque to be transmitted. Further, said differential-locking mechanism 17 can completely prohibit any differential motion between said left and right rear wheels.

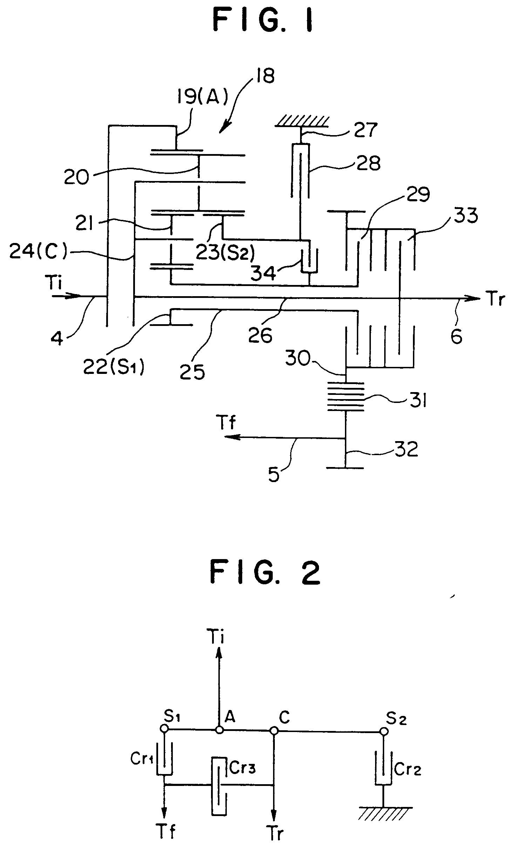

A description will now be made of details of said transfer construction. As is shown in FIG. 1, a Ravigneaux planetary gear mechanism 18 is arranged on an end portion of said input member 4. Said planetary gear mechanism 18 comprises a ring gear 19, a primary pinion gear 20 in meshing engagement with said ring gear 19, a secondary pinion gear 21 arranged on a side closer to a central axis than said primary pinion gear 20 and in meshing engagement with said primary pinion gear 20, a primary sun gear 22 arranged inside said secondary pinion gear 21 and in meshing engagement with said secondary pinion gear 21, a secondary sun gear 23 arranged at a position in series with these secondary pinion gear 21 and said primary sun gear 22 and in meshing engagement with said primary pinion gear 20, and a carrier (planetary gear) 24 rotatably supporting said primary pinion gear 20 and said secondary pinion gear 21.

Said ring gear 19 is connected for integral rotation to said input member 4, said primary sun gear 22 is connected for integral rotation to a hollow shaft 25 which leads to a front propeller shaft (front-wheel-side output member) 5, and said carrier 24 is connected for integral rotation to a shaft 26 which is connected to a propeller shaft (rear-wheel-side output member) 6.

When said ring gear 19 rotates, said primary pinion gear 20 is caused to undergo not only revolution but also rotation, whereby in association with rotation of said primary pinion gear 20, said carrier 24 rotates and in association with rotation of said primary pinion gear 20, said primary sun gear 22 rotates via said secondary pinion gear 21.

When the revolution speed and rotation speed of said primary and secondary pinion gears 20,21 become coincided, said carrier 24 and said primary sun gear 22 both rotate at the same speed as said ring gear 19. As a result, said front and rear wheels rotate at the same speed. In said planetary gear mechanism 18, the revolution speed and rotation speed of said pinion gears 20,21 are generally allowed to freely change relative to each other while being associated with each other, for example, an increase in the rotation speed results in a decrease in the revolution speed, thereby accelerating said primary sun gear 22 and decelerating said carrier 24 or a decrease in the rotation speed leads to an increase in the revolution speed, thereby decelerating said primary sun gear 22 and accelerating said carrier 24, so that a differential motion between said front and rear wheels is permitted.

Further, between said secondary sun gear 23 and a stationary member 27 on a side of a transmission case 3A, a brake (which hereinafter may also be called said "clutch") 28 is arranged as rotation-limiting means which can selectively limit rotation of said secondary sun gear 23. This brake 28 can be engaged or released from engagement as desired. Since said secondary sun gear 23 stops rotation when said brake 28 is brought into engagement, said pinion gears 20,21 are increased in rotation speed but decreased in revolution speed so that rotation to be outputted to the side of said rear-wheel-side output member 6 is decelerated.

Between said hollow shaft 25 and said front propeller shaft 5, are arranged a clutch 29 as engagement means, a front drive gear (or a front drive sprocket) 30, a transfer chain (or a front drive chain) 31, and a gear (front driven sprocket) 32 provided integrally with said front propeller shaft 5. Drive force transmitted to said hollow shaft 25 is fed from said clutch 29 to said gear 32 via said front drive gear 30 and said transfer chain 31 and is transferred to said front propeller shaft 5.

Said clutch 29 is engagement means for selectively cut off transfer of drive force from said hollow shaft 25 to said front propeller shaft 5. This clutch 29 can be engaged or released from engagement as desired. When said clutch 29 is brought into engagement, transfer of drive force to said front propeller shaft 5 is performed. However, no transfer of drive force to said front propeller shaft 5 is performed unless said clutch 29 is engaged.

Between said front drive gear 30 as a transfer route of drive force to the side of said front wheels and said shaft 26 as a transfer route of drive force to the side of said rear wheels, a clutch 33 is arranged as engagement means which can associate a state of rotation of said front wheel side (namely, said front propeller shaft 5 as said front-wheel-side output means) with that of said rear wheel side (namely, said propeller shaft 6 as said rear-wheel-side output member) and vice versa.

Said clutch 33 can be engaged or released from engagement as desired. When said clutch 33 is brought into engagement, said front propeller shaft 5 and said propeller shaft 6 are associated with each other in the state of rotation so that a differential motion therebetween is limited. Unless said clutch 33 is brought into engagement, said front propeller shaft 5 and said propeller shaft 6 are not associated with each other in the state of rotation so that a free differential motion is feasible.

Further, a clutch 34 is arranged between said hollow shaft 25 on the side of said primary sun gear 22 and said secondary sun gear 23. This clutch 34 can also be engaged or released from engagement as desired. By bringing this clutch 34 into engagement, said two sun gears 22 and 23 are integrally rotated. During engagement of said clutch 34, said primary pinion gear 20 and said secondary pinion gear 21 are no longer rotatable. Rotation of said ring gear 19 is therefore transferred, as is, to said shafts 25,26.

Of said individual clutch systems 28,29,33,34 described above, said clutch 33 is a clutch of the variable transfer capacity type and is constructed, for example, of a hydraulic multiplate clutch. It is equipped with a complete engagement mode (hereinafter called the "lock mode") in which transfer of torque is effected without development of a slip and an engagement-released mode (hereinafter called the "free mode") in which transfer of torque is not effected and also with a slip transfer mode in which transmission of drive force is effected while allowing a slip to occur between members rotating relative to each other and the quantity of drive force to be transferred can be controlled by changing the state of slipping. No slip transfer mode is taken into consideration for the remaining clutches 28,29,34 so that they are set either in the lock mode or in the free mode. In particular, a dog clutch can be used as said brake 28. Incidentally, locking of these clutches will be called "ON" while their unlocking into free positions will be called "OFF".

FIG. 2 shows a speed diagram relating to individual elements of such a transfer construction. In the diagram, said clutch 34 is omitted. In FIG. 2, A indicates said ring gear 19, $S_1$ said primary sun gear 22, $S_2$ said secondary sun gear 23, and C said carrier 24. Further, $C_{r1}$ designates said clutch 29, $C_{r2}$ said brake 28, and $C_{r3}$ said clutch 33. Ti indicates an input torque, Tf an output torque toward said front wheels, Tr an output torque toward said rear wheels. FIG. 2 illustrates the situation in which said clutch 29 and said clutch 33 are both ON and said brake 28 is OFF.

Owing to the above-mentioned construction, said transfer construction according to this embodiment can set, for example, such various drive modes as shown in the following Table 1 while engaging or releasing said clutch 29, said clutch 33 and said brake 28, respectively.

TABLE 1

| Drive mode | | | Used clutch (X: ON, -: OFF) | | | |
|---|---|---|---|---|---|---|
| Mode No. | Sub-transmission | Drive state | $C_{r1}$ | $C_{r2}$ | $C_{r3}$ | $C_{r4}$ |
| 1 | High | 2WD | - | - | - | X |
| 2 | High | C/D-4WD | X | - | Slip | - |
| | High | DC 4WD | X | - | X | - |

8

TABLE 1 (continued)

| Drive mode | | | Used clutch (X: ON, -: OFF) | | | |
|---|---|---|---|---|---|---|
| Mode No. | Sub-transmission | Drive state | $C_{r1}$ | $C_{r2}$ | $C_{r3}$ | $C_{r4}$ |
| 3 | Low | DC 4WD | - | X | X | - |

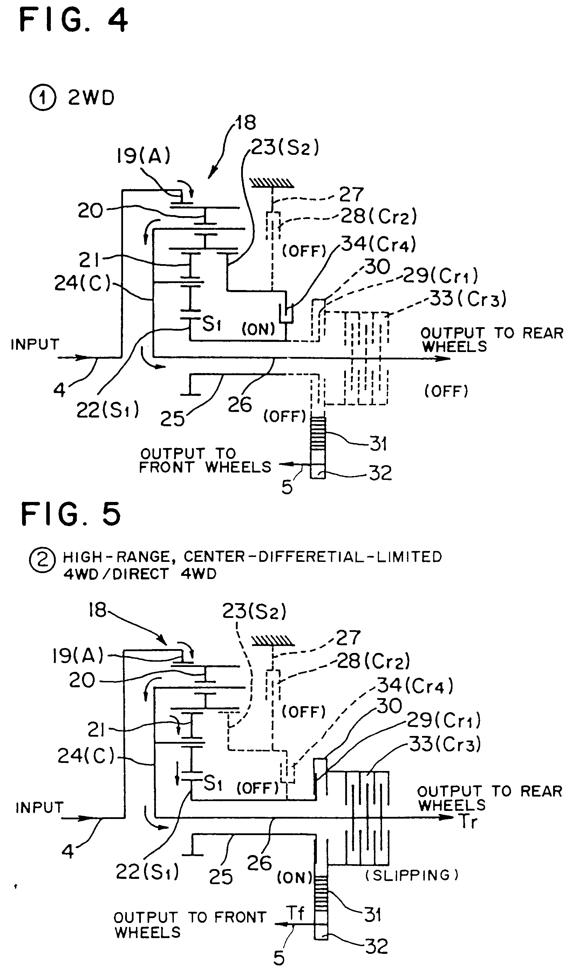

Mode No. 1 in TABLE 1 corresponds to FIG. 4, in which said sub-transmission is set in a high-speed position and the drive state is in a high-speed two-wheel drive mode so that only the rear wheels are set in a 2WD mode. Incidentally, in FIG. 4, members to which drive force is transferred are indicated by solid lines, while members to which no drive force is transmitted are indicated by broken lines.

To achieve this drive mode, said brake ($C_{r2}$) 28 is set in the OFF position to set said sub-transmission in the high-speed position as shown in TABLE 1 and FIG. 1. Further, said clutch ($C_{r1}$) 29 and said clutch ($C_{r3}$) 33 are each set in the OFF position to cut off transfer of drive force toward said front wheels. Further, said clutch ($C_{r4}$) 34 is set on the ON position so that said planetary gear mechanism 18 is set to integrally rotate as a whole.

As a consequence, drive force is transferred through such a route as shown by arrows in FIG. 4 so that only said rear wheels are driven.

Mode No. 2 in TABLE 1 corresponds to FIG. 5, in which said sub-transmission is set in the high-speed position and said drive state is in a high-speed four-wheel drive (4WD) mode so that drive force is transferred to both said front and rear wheels. To achieve this drive mode, said brake ($C_{r2}$) 28 is set in the OFF position and said sub-transmission is set in said high-speed position so that said planetary gear mechanism 18 is caused to operate as an inherent double-pinion planetary gear differential mechanism. Further, said clutch ($C_{r1}$) 29 is set in the ON position to achieve a position in which drive force is transferred toward said front wheels. Moreover, said clutch ($C_{r3}$) 33 is set in a slip position or in the ON position. Further, said clutch ($C_{r4}$) 34 is set in the OFF position.

When said clutch ($C_{r3}$) 33 is set in a slip position, a differential motion between said front and rear wheels is partly limited depending on the slip position at that time, whereby a four-wheel drive with said center differential in operation (C/D-4WD) is achieved. Further, when said clutch ($C_{r3}$) 33 is set in the ON position, a differential motion between said front and rear wheels is completely limited so that a front-to-rear directly-coupled four-wheel drive (directly-coupled 4WD) is achieved.

As a consequence, drive force is transferred through such a route as indicated by arrows in FIG. 5 so that said front wheels and said rear wheels are driven.

The front-to-rear drive force distribution ratio (Tf/Tr) at this time can be expressed as follows:

$$Tf/Tr = Zs_1/(Za - Zs_1)$$

where Za is the number of teeth on said ring gear 19, $Zs_1$ is the number of teeth on said primary sun gear 22, and $Zs_2$ is the number of teeth on said secondary sun gear 23.

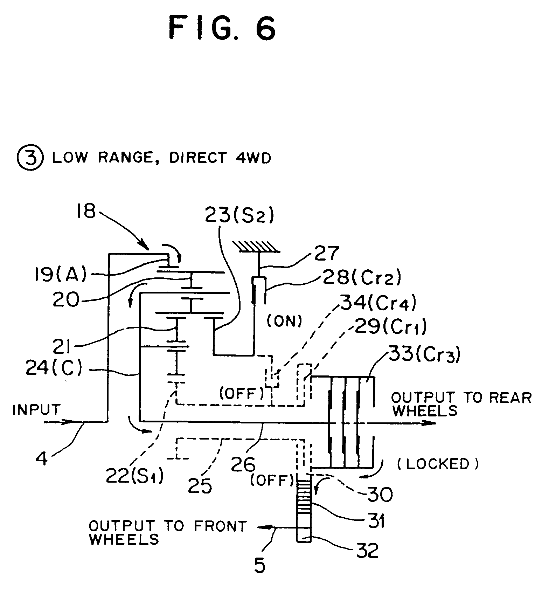

Mode No. 3 in TABLE 1 corresponds to FIG. 6, in which said sub-transmission is set in the low-speed position and said drive state is set in such a four-wheel drive (4WD) mode that drive force is transmitted to both said front and rear wheels, that is, in a low-speed four-wheel drive mode. To achieve this drive mode, said brake ($C_{r2}$) 28 is set in the ON position and said sub-transmission is set in a low-speed position as shown in TABLE 1 and FIG. 6, whereby said planetary gear mechanism 18 is operated as a single-pinion planetary gear reduction mechanism. Further, by setting said clutch ($C_{r1}$) 29 in the OFF position and said clutch ($C_{r3}$) 33 in the ON position, a front-to-rear, directly-coupled four-wheel drive (directly-coupled 4WD) mode in which a differential motion between said front and rear wheels is completely limited is set. Further, said clutch ($C_{r4}$) 34 is set in the OFF position.

As a consequence, drive force is transferred through such a route as indicated by arrows in FIG. 6 so that the rotation of the drive force is shifted to a low speed and then drives said front wheels and said rear wheels.

With respect to a reduction ratio ρ at this time, the following equation can be established:

$$\rho = (Za + Zs_2)/Za$$

As is understood from the foregoing, the present transfer construction can achieve a directly-coupled four-wheel drive when said sub-transmission is in a low-speed position and also a four-wheel drive with the center differential in operation when said sub-transmission is in a high-speed position while having both functions of said sub-transmission and functions of said center differential in its integral mechanism.

It is therefore possible to achieve various drive modes required for four-wheel drive vehicles led by off-road vehicles while promoting dimensional and weight reductions of the transfer portion.

Further, in the construction according to this embodiment, said input and output elements are efficiently laid out. In this respect too, it is possible to contribute to the dimensional and weight reductions of the transfer portion.

In this embodiment, the two-wheel drive mode (the rear-wheel drive mode in this embodiment) is achieved by the arrangement of said clutch 34 between said primary sun gear 22 and said secondary sun gear 23. If the two-wheel drive mode is not needed, this clutch 34 can be omitted, and only said clutches 29,33 and said brake 28 can be arranged.

As is understood from the foregoing, in the four elements composed of said ring gear (A) 19, said primary sun gear ($S_1$) 22, said secondary sun gear ($S_2$) 23 and said carrier (C) 24 in this transfer construction, one element is coupled or arranged for couplement to said input member, one element to said front-wheel-side output member, and one element to said rear-wheel-side output member, and the remaining element is arranged for couplement to said stationary portion, as shown in FIG. 2. Such a 4-element transfer construction is advantageous for dimensional and weight reductions compared with a 3-element transfer construction. This matter will hereinafter be described.

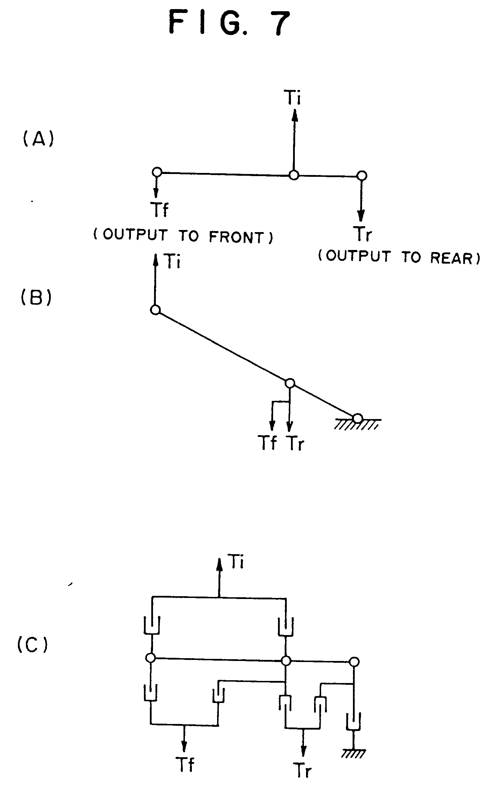

FIG. 7 are the speed diagrams for illustrating the construction of the 3-element transfer construction. In FIGS. 7(A), (B) and (C), the three elements are indicated by a circle. Here, the three elements will be designated successively as a first element, a second element and a third element from the left end.

According to the 3-element transfer construction, it is contemplated to set an input and outputs as shown in FIG. 7(A) for the achievement of the high-speed four-wheel drive mode with said center differential in operation where said sub-transmission is set in the high-speed position and said center differential is operated to permit a differential motion between said front and rear wheels and also to set an input and outputs as shown in FIG. 7(B) for the achievement of the directly-coupled, low-speed four-wheel drive mode where said sub-transmission is set in the low-speed position and said center differential is locked to directly couple said front wheels and said rear wheels to each other.

Namely, to set the high-speed four-wheel drive mode with said center differential in operation, it is contemplated, as shown in FIG. 7(A), to couple one (said second element) of said three elements to said input member to input drive force Ti, one (said first element) of the remaining two elements is coupled to said front-wheel-side output member to output front-wheel-side drive force Tf, and the other element (said third element) is coupled to said rear-wheel-side output member to output rear-wheel-side drive force Tr.

To set the directly-coupled low-speed four-wheel drive mode, on the other hand, it is contemplated, as illustrated in FIG. 7(B), to couple one (said first element) of said three elements to said input member to input drive force Ti, to couple one (said third element) of the remaining two elements to said stationary member to limit rotation, and to couple the other element (said second element) to said front-wheel-side output member and said rear-wheel-side output member to output front-wheel-side drive force Tf and rear-wheel-side drive force Tr.

To achieve each of these modes, it is necessary, as illustrated in FIG. 7(C), to arrange clutches or the like at 6 places in total, that is, between said input member and said two elements (said first element and said second element), between said front-wheel-side output member and said two elements (said first element and said second element), and between said rear-wheel-side output member and said two elements (said second element and said third element) and also to arrange a brake between said stationary member and said one element (said third element).

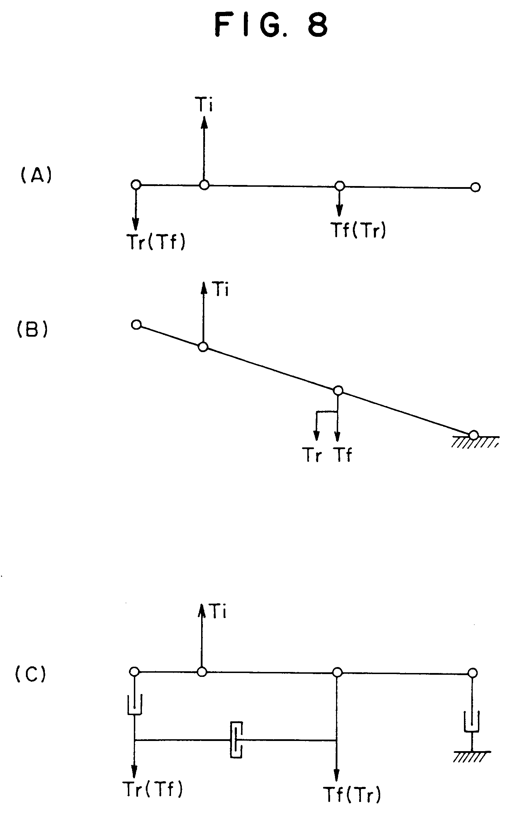

On the other hand, FIG. 8 are the speed diagrams for explaining the structure of a 4-element transfer construction. In FIGS. 8(A), (B) and (C), four elements are indicated by circles. Here, the four elements will be designated successively as a first element, a second element, a third element and a fourth element from the left end.

According to the 4-element transfer construction, it is contemplated to set an input and outputs as shown in FIG. 8(A) for the achievement of the high-speed four-wheel drive mode with said center differential in operation where said sub-transmission is set in the high-speed position and said center differential is operated to permit a differential motion between said front and rear wheels and also to set an input and outputs as shown in FIG. 8(B) for the achievement of the directly-coupled, low-speed four-wheel drive mode where said sub-transmission is set in the low-speed position and said center differential is locked to directly couple said front wheels and said rear wheels to each other.

Namely, to set the high-speed four-wheel drive mode with said center differential in operation, it is contemplated, as shown in FIG. 8(A), to couple one (said second element) of said four elements to said input member to input drive force Ti, one (said third or first element) of the remaining three elements is coupled to said front-wheel-side output member to output front-wheel-side drive force Tf, and another one (said first or third element) is coupled to said rear-wheel-side output member to output rear-wheel-side drive force Tr.

To set the directly-coupled low-speed four-wheel drive mode, on the other hand, it is contemplated, as illustrated in FIG. 8(B), to couple one (said second element) of said four elements to said input member to input drive force Ti, to couple one (said fourth element) of the remaining three elements to said stationary member to limit rotation, and to couple one of the remaining two elements (said third element) to said front-wheel-side output member and said rear-wheel-side output member to output front-wheel-side drive force Tf and rear-wheel-side drive force Tr.

These modes can each be achieved, as illustrated in FIG. 8(C), by simply arranging clutches or the like at two places in total, that is, between said rear-wheel-side output member or said front-wheel-side output member and one element (said first element) and between said front-wheel-side output member and said rear-wheel-side output member and also to arrange a brake between said stationary member and one element (said fourth element).

As has been described above, compared with a 3-element transfer construction, a 4-element transfer construction can achieve desired drive modes with fewer clutches and is advantageous for dimensional and weight reductions.

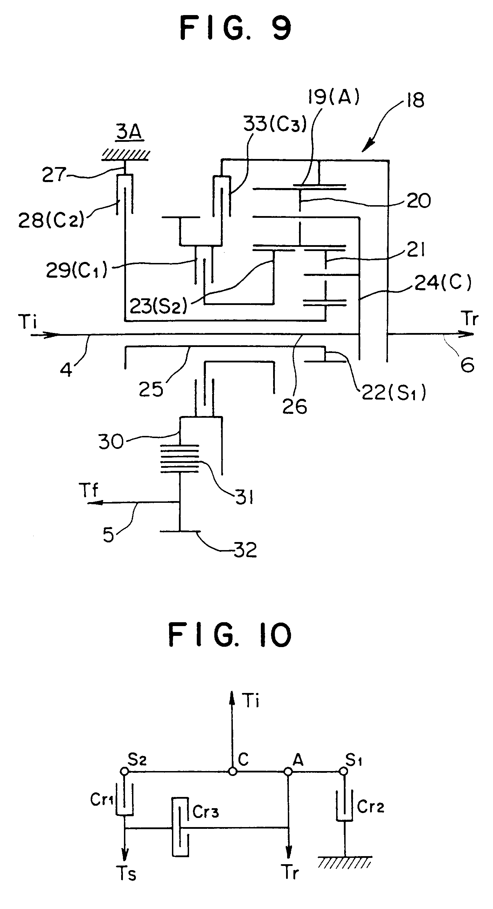

A description will next be made of the second embodiment of the present invention. As is illustrated in FIG. 9, this transfer construction has been obtained by changing the arrangement of said secondary pinion gear 21 and said primary sun gear 22 relative to said secondary sun gear 23 and also exchanging the coupling element to said input member 4 with the coupling element to said propeller shaft (said rear-wheel-side output member) 6 in the construction according to the first embodiment.

Namely, a Ravigneaux planetary gear mechanism 18 is arranged on an end portion of said input member 4. Said planetary gear mechanism 18 comprises a ring gear 19, a primary pinion gear 20 in meshing engagement with said ring gear 19, a secondary pinion gear 21 arranged on a side closer to a central axis than said primary pinion gear and in meshing engagement with said primary pinion gear 20, a primary sun gear 22 arranged inside said secondary pinion gear 21 and in meshing engagement with said secondary pinion gear 21, a secondary sun gear 23 arranged at a position in series with these secondary pinion gear 21 and said sun gear 22 and in meshing engagement with said primary pinion gear 20, and a carrier (planetary gear) 24 rotatably supporting said primary pinion gear 20 and said secondary pinion gear 21.

Said carrier 24 is connected for integral rotation to said input member 4, said primary sun gear 22 is connected for integral rotation to a hollow shaft 25 which leads to a front propeller shaft (front-wheel-side output member) 5, and said ring gear 19 is connected for integral rotation to a large-diameter hollow shaft 26A which is connected to a propeller shaft (rear-wheel-side output member) 6.

When said carrier 24 rotates, said primary pinion gear 20 and said secondary pinion gear are caused to undergo not only revolution but also rotation, whereby in association with rotation of said primary pinion gear 20, said ring gear 19 rotates and in association with rotation of said secondary pinion gear 21, said primary sun gear 22 rotates.

Of course, when the revolution speed and rotation speed of said primary and secondary pinion gears 20,21 become coincided, said carrier 24, said primary sun gear 22 and said ring gear 19 rotate at the same speed as said ring gear 19. As a result, said front and rear wheels rotate at the same speed. In said planetary gear mechanism 18, the revolution speed and rotation speed of said pinion gears 20,21 are generally allowed to freely change relative to each other while being associated with each other, so that a differential motion between said front and rear wheels is permitted.

In addition, like the first embodiment, clutches 29,33,34 and a brake 28 are also arranged.

Namely, between said secondary sun gear 23 and a stationary member 22 on a side of a transmission case 3A, a brake (which hereinafter may also be called said "clutch") 28 is arranged as rotation-limiting means which can selectively limit rotation of said secondary sun gear 23.

Between said hollow shaft 25 and said front propeller shaft 5, are also arranged a clutch 29 as engagement means, a front drive gear 30, a transfer chain 31, and a gear 32 provided integrally with said front propeller shaft 5. As a consequence, when said clutch 29 is brought into engagement, drive force transmitted to said hollow shaft 25 is fed from said clutch 29 to said gear 32 via said front drive gear 30 and said transfer chain 31 and is transferred to said front propeller shaft 5. Unless said clutch 29 is brought into engagement, however, transfer of drive force to said front propeller shaft 5 is not performed.

Between said front drive gear 30 as a transfer route of drive force to the side of said front wheels and said hollow shaft 26A as a transfer route of drive force to the side of said rear wheels, a clutch 33 is arranged as engagement means which can associate a state of rotation of said front wheel side with that of said rear wheel side and vice versa. Said clutch 33 can be engaged or released from engagement as desired. When said clutch 33 is brought into engagement, said front propeller shaft 5 and said propeller shaft 6 are associated with each other in the state of rotation so that a differential motion therebetween is limited. Unless said clutch 33 is brought into engagement, said front propeller shaft 5 and said propeller shaft 6 are not associated with each other in the state of rotation so that a free differential motion is feasible.

Further, although not illustrated in any drawing, a clutch 34 can be arranged, for example, between said primary sun gear 22 and said secondary sun gear 23 as in the first embodiment. By bringing this clutch 34 into engagement, said primary pinion gear 20 and said secondary pinion gear 21 are no longer rotatable. Rotation of said sun gear 22 is therefore transferred, as is, to said shafts 25,26.

Of said individual clutch systems 28,29,33,34 described above, said clutch 33 is a clutch of the variable transfer capacity type. No slip transfer mode is taken into consideration for the remaining clutches 28,29,34 so that they are set either in the lock mode or in the free mode. In particular, a dog clutch can be used as said brake 28.

FIG. 10 shows a speed diagram relating to individual elements of such a transfer construction. In FIG. 10, A indicates said ring gear 19, $S_1$ said primary sun gear 22, $S_2$ said secondary sun gear 23, and C said carrier 24. Further, $C_{r1}$ designates said clutch 29, $C_{r2}$ said brake 28, and $C_{r3}$ said clutch 33. Ti indicates an input torque, Tf an output torque toward said front wheels, Tr an output torque toward said rear wheels. FIG. 10 illustrates the situation in which said clutch 29 and said clutch 33 are both ON and said brake 28 is OFF.

Owing to the above-mentioned construction, said transfer construction according to this embodiment can set, for example, such various drive modes as shown in Table 1 while, as in the first embodiment, engaging or releasing said clutch 29, said clutch 33 and said brake 28, respectively. It is therefore possible to achieve various drive modes required for four-wheel drive vehicles led by off-road vehicles while promoting dimensional and weight reductions of the transfer portion.

Further, the construction of this embodiment has the advantage that owing to the construction of its gears, the distribution ratio of the center differential and a subordinate shift ratio can be set at large values.

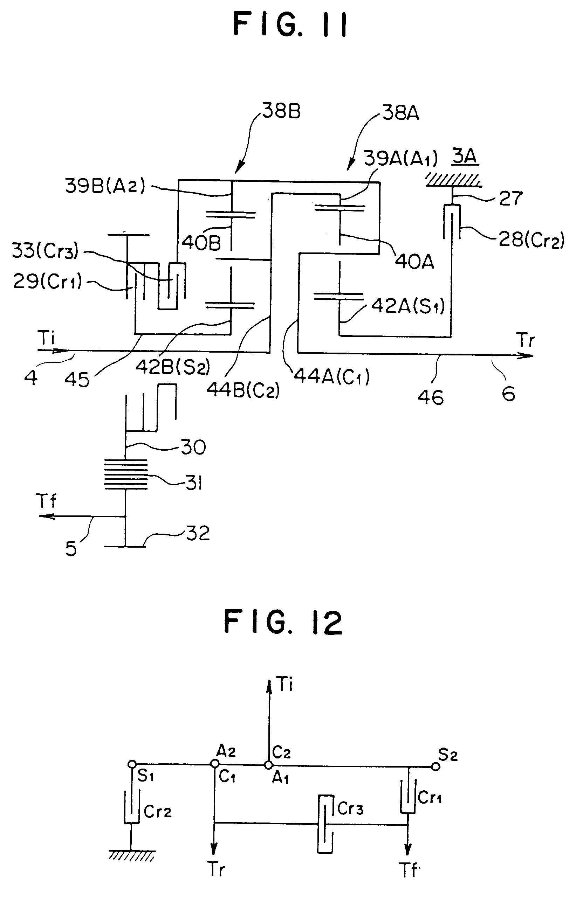

Next, the third embodiment of the present invention will be described. As is illustrated in FIG. 11, this transfer construction is formed by arranging two planetary gear mechanisms of the single-pinion type in series and is provided with a primary planetary gear mechanism 38A and a secondary planetary gear mechanism 38B.

Said primary planetary gear mechanism 38A comprises a ring gear 39A, a pinion gear 40A, a sun gear 42A and a carrier 44A, while said secondary planetary gear mechanism 38B comprises a ring gear 39B, a pinion gear 40B, a sun gear 42B and a carrier 44B.

Said ring gear 39A of said primary planetary gear mechanism 38A and said carrier 44BA of said secondary planetary gear mechanism 38B are connected to an input member 4 so that they can integrally rotate. Said sun gear 42B of said secondary planetary gear mechanism 38B is connected to a hollow shaft 45, which extends to a front propeller shaft (front-wheel-side output member) 5, so that they can integrally rotate. Said carrier 44A of said primary planetary gear mechanism 38A is connected to a shaft 46, is which connected to a propeller shaft (rear-wheels-side output member) 6, so that they can integrally rotate.

Therefore, rotation of said input member 4 is transferred from said ring gear 39A and said pinion gear 40A to said carrier 44A and is outputted to the side of rear wheels, and is also transferred from said carrier 44B and said pinion gear 40B to said sun gear 42B and is outputted to the side of front wheels.

Further, between said sun gear 42A and a stationary member 27 on the side of a transmission case 3A, a brake (hereinafter called the "clutch") 28 is arranged as rotation-limiting means capable of selectively limiting rotation of said sun gear 42A.

Arranged between said hollow shaft 45 and said front propeller shaft 5 are a clutch 29 as engagement means, a front drive gear 30, a transfer chain 31, and a gear 32 integrally mounted on said front propeller shaft 5. Accordingly, when said clutch 29 is brought into engagement, drive force transferred to said hollow shaft 45 is fed from said clutch 29 to said gear 32 via said front drive gear 30 and said transfer chain 31 and is then transmitted to said front propeller shaft 5. Transmission of drive force to said front propeller shaft 5 is however not performed if said clutch 29 is not brought into engagement.

Between said hollow shaft 45 as a transfer route of drive force to the side of said front wheels and said carrier 44A as a transfer route of drive force to the side of said rear wheels, a clutch 33 which can be engaged or released from engagement as desired is arranged as engagement means capable of associating the state of rotation on the side of said front wheels with the state of rotation on the side of said rear wheels and vice versa. As a consequence, when said clutch 33 is brought into engagement, the state of rotation of said front propeller shaft 5 and that of said propeller shaft 6 are associated with each other so that a differential motion therebetween is limited. If said clutch 33 is not brought into engagement, said front propeller shaft and said propeller shaft 6 are not associated in the state of rotation with each other so that a free differential motion is feasible.

Although not illustrated in the drawing, a clutch 34 may be arranged, for example, between said carrier 44A and said sun gear 42A as in the first embodiment. In this case, when said clutch 34 is brought into engagement, said primary planetary gear mechanism 38A integrally rotates as a whole so that rotation of a ring gear 19 is transferred, as is, to said shafts 45,46.

Of said individual clutch systems 28,29,33,34 described above, said clutch 33 is a clutch of the variable transfer capacity type. No slip transfer mode is taken into consideration for the remaining clutches 28,29,34 so that they are set either in the lock mode or in the free mode. In particular, a dog clutch can be used as said brake 28.

FIG. 12 shows a speed diagram relating to individual elements of such a transfer construction. $A_1$ indicates said ring gear 39A, $A_2$ said ring gear 39B, $S_1$ said sun gear 42A, $S_2$ said sun gear 42B, $C_1$ said carrier 44A, and $C_2$ said carrier 44A. Further, $C_{r1}$ designates said clutch 29, $C_{r2}$ said brake 28, and $C_{r3}$ said clutch 33. Ti indicates an input torque, Tf an output torque toward said front wheels, Tr an output torque toward said rear wheels. FIG. 12 illustrates the situation in which said clutch 29 and said clutch 33 are both ON and said brake 28 is OFF.

Owing to the above-mentioned construction, said transfer construction according to this embodiment can set, for example, such various drive modes as shown in Table 1 while, as in the first embodiment, engaging or releasing said clutch 29, said clutch 33 and said brake 28, respectively. It is therefore possible to achieve various drive modes required for four-wheel drive vehicles led by off-road vehicles while promoting dimensional and weight reductions of the transfer portion.

This embodiment is also advantageous in manufacturing cost because it uses the single-pinion planetary gear mechanisms.

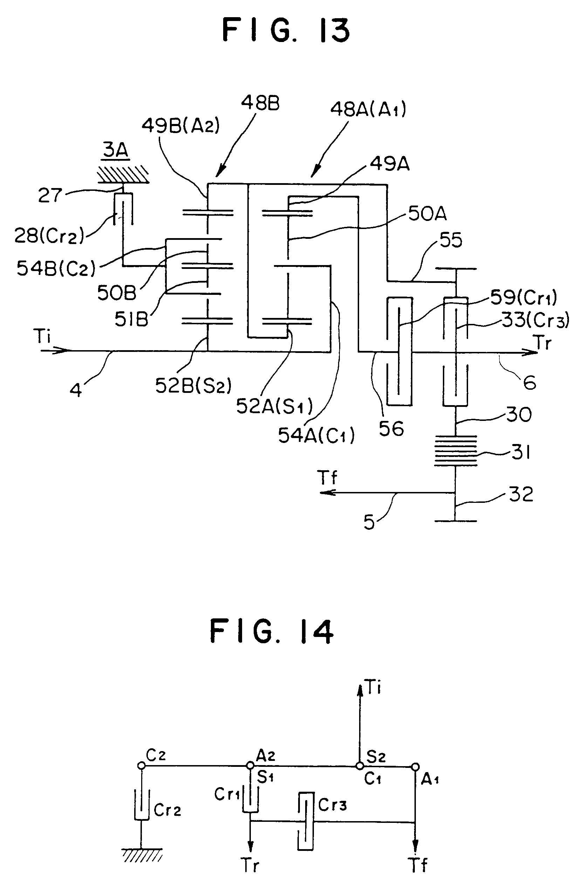

Next, the fourth embodiment of the present invention will be described. As is illustrated in FIG. 13, this transfer construction is formed by arranging two planetary gear mechanisms in series, one being a primary planetary gear mechanism 48A of the single pinion type and the other a secondary planetary gear mechanism 48B of the double pinion type.

Said primary planetary gear mechanism 48A comprises a ring gear 49A, a pinion gear 50A, a sun gear 52A and a carrier 54A, while said secondary planetary gear mechanism 48B comprises a ring gear 49B, an outer pinion gear 50B, an inner pinion gear 51B, a sun gear 52B and a carrier 54B.

Said carrier 54A of said primary planetary gear mechanism 48A is connected to an input member 4 so that they can integrally rotate. Said sun gear 52A of said primary planetary gear mechanism 48A and said ring gear 49B of said secondary planetary gear mechanism 48B are connected to a hollow shaft 55, which extends to a front propeller shaft (front-wheel-side output member) 5, so that they can integrally rotate. Said ring gear 49A of said primary planetary gear mechanism 48A is connected to a shaft 56, which is connected to a propeller shaft (rear-wheels-side output member) 6, so that they can integrally rotate.

Therefore, rotation of an input member 4 is transferred from said carrier 54A and said pinion gear 50A to said ring gear 49A and is outputted to the side of rear wheels, and is also transferred from said carrier 54A to said sun gear 52A and is outputted to the side of front wheels.

Further, between said carrier 54B and a stationary member 27 on the side of a transmission case 3A, a brake (which hereinafter may also be called the "clutch") 28 is arranged as rotation-limiting means capable of selectively limiting rotation of said carrier 54B.

In addition, a front drive gear 30 is connected to said hollow shaft 55 and via said transfer chain 31 and a gear 32 integrally arranged with said front propeller shaft 5, is also connected to said front propeller shaft 5. Accordingly, drive force transferred to said hollow shaft 55 is fed to said gear 32 via said front drive gear 30 and said transfer chain 31 and is then transmitted to said front propeller shaft 5.

At an intermediary part of said shaft 56 which extends to the side of said rear wheels, a clutch 59 is arranged as engagement means. When said clutch 59 is brought into engagement, drive force transferred to said shaft 56 is transmitted to said propeller shaft 6. Transmission of drive force to said propeller shaft 6 is however not performed if said clutch 59 is not brought into engagement.

Between a supporting portion of said front drive gear 30 as a transfer route of drive force to the side of said front wheels and the side of said shaft 56 as a transmission route of drive force to the side of said rear wheels, a clutch 33 which can be engaged or released from engagement as desired is arranged as engagement means capable of associating the state of rotation on the side of said front wheels with the state of rotation on the side of said rear wheels and vice versa. As a consequence, when said clutch 33 is brought into engagement, the state of rotation of said front propeller shaft 5 and that of said propeller shaft 6 are associated with each other so that a differential motion therebetween is limited. If said clutch 33 is not brought into engagement, said front propeller shaft 5 and said propeller shaft 6 are not associated in the state of rotation with each other so that a free differential motion is feasible.

Although not illustrated in the drawing, a clutch 34 may be arranged, for example, between said carrier 54A and said sun gear 52A as in the first embodiment. In this case, when said clutch 34 is brought into engagement, said primary planetary gear mechanism 38A integrally rotates as a whole so that rotation of a ring gear 19 is transferred, as is, to said shafts 55,56.

Of said individual clutch systems 28,59,33,34 described above, said clutch 33 is a clutch of the variable transfer capacity type. No slip transfer mode is taken into consideration for the remaining clutches 28,59,34 so that they are set either in the lock mode or in the free mode. In particular, a dog clutch can be used as said brake 28.

FIG. 14 shows a speed diagram relating to individual elements of such a transfer construction. In Fig. 14, $A_1$ indicates said ring gear 49A, $A_2$ said ring gear 49B, $S_1$ said sun gear 52A, $S_2$ said sun gear 52B, $C_1$ said carrier 54A, and $C_2$ said carrier 54A. Further, $C_{r1}$ designates said clutch 59, $C_{r2}$ said brake 28, and $C_{r3}$ said clutch 33. Ti indicates an input torque, Tf an output torque toward said front wheels, Tr an output torque toward said rear wheels. FIG. 14 illustrates the situation in which said clutch 59 and said clutch 33 are both ON and said brake 28 is OFF.

Owing to the above-mentioned construction, said transfer construction according to this embodiment can set, for example, such various drive modes as shown in TABLE 1 while, as in the first embodiment, engaging or releasing said clutch 59, said clutch 33 and said brake 28, respectively. It is therefore possible to achieve various drive modes required for four-wheel drive vehicles led by off-road vehicles while promoting dimensional and weight reductions of the transfer portion. In this embodiment, however, a two-wheel drive mode is a front-wheel drive mode which is achieved by bringing both said clutch 59 and said clutch 33 into OFF positions to cut off transmission of drive force to said rear wheels.

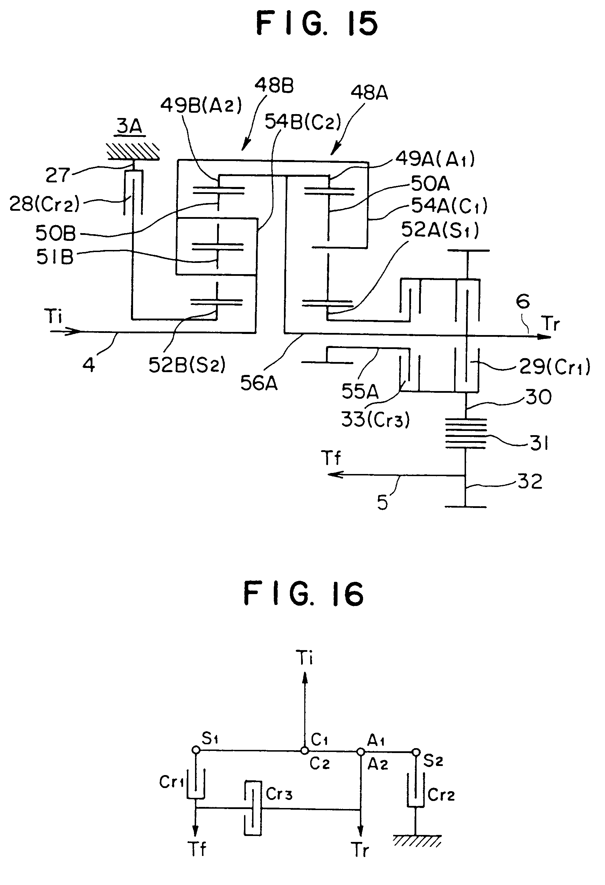

Next, the fifth embodiment of the present invention will be described. As is illustrated in FIG. 15, this transfer construction is formed, as in the fourth embodiment, by arranging two planetary gear mechanisms in series, one being a primary planetary gear mechanism 48A of the single pinion type and the other a secondary planetary gear mechanism 48B of the double pinion type.

Said primary planetary gear mechanism 48A comprises a ring gear 49A, a pinion gear 50A, a sun gear 52A and a carrier 54A, while said secondary planetary gear mechanism 48B comprises a ring gear 49B, an outer pinion gear 50B, an inner pinion gear 51B, a sun gear 52B and a carrier 54B.

Said carrier 54A of said primary planetary gear mechanism 48A and said carrier 54B of said secondary planetary gear mechanism 48B are connected to an input member 4 so that they can integrally rotate. Said sun gear 52B of said secondary planetary gear mechanism 48B is connected to a hollow shaft 55A, which extends to a front propeller shaft (front-wheel-side output member) 5, so that they can integrally rotate. Said ring gear 49A of said primary planetary gear mechanism 48A and said ring gear 49B of said secondary planetary gear mechanism 48B are connected to a shaft 56A, which is connected to a propeller shaft (rear-wheels-side output member) 6, so that they can integrally rotate.

Therefore, rotation of an input member 4 is transferred from said carrier 54A and said pinion gear 50A to said sun gear 52A and is outputted to the side of front wheels, and is also transferred from said carrier 54B and said pinion gear 50B to said ring gear 49B and is outputted to the side of rear wheels.

Further, between said sun gear 52B and a stationary member 27 on the side of a transmission case 3A, a brake (which hereinafter may also be called the "clutch") 28 is arranged as rotation-limiting means capable of selectively limiting rotation of said carrier 54B.

Between said hollow shaft 55A and said front propeller shaft 5, are also arranged a clutch 29 as engagement means, a front drive gear 30, a transfer chain 31, and a gear 32 provided integrally with said front propeller shaft 5. As a consequence, when said clutch 29 is brought into engagement, drive force transmitted to said hollow shaft 55A is fed from said clutch 29 to said gear 32 via said front drive gear 30 and said transfer chain 31 and is transferred to said front propeller shaft 5. Unless said clutch 29 is brought into engagement, however, transfer of drive force to said front propeller shaft 5 is not performed.

At an intermediary part of said shaft 56 which extends to the side of said rear wheels, a clutch 59 is arranged as engagement means. When said clutch 59 is brought into engagement, drive force transferred to said shaft 56 is transmitted to said propeller shaft 6. Transmission of drive force to said propeller shaft 6 is however not performed if said clutch 59 is not brought into engagement.

Between a supporting portion of said front drive gear 30 as a transfer route of drive force to the side of said front wheels and the side of said shaft 56 as a transmission route of drive force to the side of said rear wheels, a clutch 33 which can be engaged or released from engagement as desired is arranged as engagement means capable of associating the state of rotation on the side of said front wheels with the state of rotation on the side of said rear wheels and vice versa. As a consequence, when said clutch 33 is brought into engagement, the state of rotation of said front propeller shaft 5 and that of said propeller shaft 6 are associated with each other so that a differential motion therebetween is limited. If said clutch 33 is not brought into engagement, said front propeller shaft 5 and said propeller shaft 6 are not associated in the state of rotation with each other so that a free differential motion is feasible.

Although not illustrated in the drawing, a clutch 34 may be arranged, for example, between said carrier 54A and said sun gear 52A as in the first embodiment. In this case, when said clutch 34 is brought into engagement, said primary planetary gear mechanism 38A integrally rotates as a whole so that rotation of a ring gear 19 is transferred, as is, to said shafts 55A,56A.

Of said individual clutch systems 28,29,33,34 described above, said clutch 33 is a clutch of the variable transfer capacity type. No slip transfer mode is taken into consideration for the remaining clutches 28,29,34 so that they are set either in the lock mode or in the free mode. In particular, a dog clutch can be used as said brake 28.

FIG. 16 shows a speed diagram relating to individual elements of such a transfer construction. In Fig. 16, $A_1$ indicates said ring gear 49A, $A_2$ said ring gear 49B, $S_1$ said sun gear 52A, $S_2$ said sun gear 52B, $C_1$ said carrier 54A, and $C_2$ said carrier 54A. Further, $C_{r1}$ designates said clutch 29, $C_{r2}$ said brake 28, and $C_{r3}$ said clutch 33. Ti indicates an input torque, Tf an output torque toward said front wheels, Tr an output torque toward said rear wheels. FIG. 16 illustrates the situation in which said clutch 59 and said clutch 33 are both ON and said brake 28 is OFF.

Owing to the above-mentioned construction, said transfer construction according to this embodiment can set, for example, such various drive modes as shown in TABLE 1 while, as in the first embodiment, engaging or releasing said clutch 59, said clutch 33 and said brake 28, respectively. It is therefore possible to achieve various drive modes required for four-wheel drive vehicles led by off-road vehicles while promoting dimensional and weight reductions of the transfer portion.

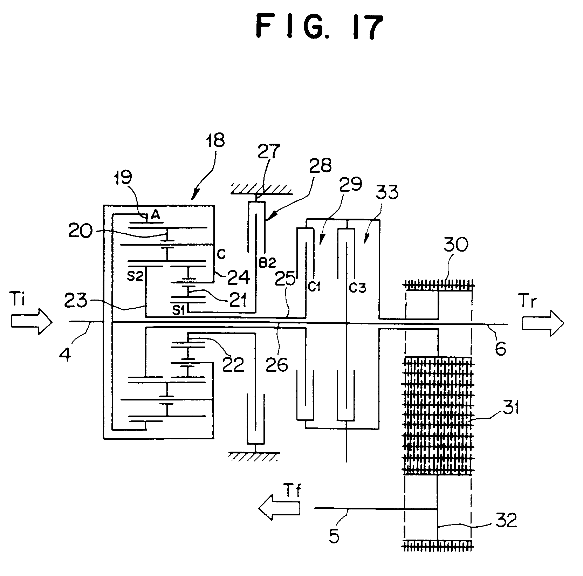

Next, the sixth embodiment of the present invention will be described. As is illustrated in FIG. 17, this transfer construction is equipped with a Ravigneaux planetary gear mechanism 18 and basically has the same construction as the first embodiment. In FIG. 17, the reference numerals which have already been used with respect to the first embodiment indicate either similar or corresponding members. A description will therefore be made of differences from the first embodiment.

A characteristic feature of this embodiment resides in that a front drive gear 30 and a transfer chain (or a front drive chain) 31 are arranged closer to a rear part of a vehicle than said planetary gear mechanism 18, a clutch 29 and a clutch 33.

Owing to this construction, the axial length of a front propeller shaft 5, compared with the construction of the first embodiment, can be extended by a length over which said front drive gear 30 and said transfer chain 31 have been moved toward said rear part of said vehicle. This has made it possible to reduce, compared with the first embodiment, a bending angle at a connecting part between said front propeller shaft 5 and a front differential 8. Rotational vibrations of said front propeller shaft 5 and a bevel gear mechanism 7 can thus be reduced, thereby making it possible to reduce vibrations and noise of a vehicle.

Capability of exploitation in industry

As has been described above, the transfer construction according to the present invention can promote dimensional and weight reductions of a transfer portion by incorporating the functions of a sub-transmission and the function of a center differential in an integral construction and further, can achieve a directly-coupled four-wheel when the sub-transmission is in a low-speed position and a four-wheel drive with its center differential in operation when the sub-transmission is in a high-speed position. The transfer construction according to the present invention is therefore suited for more effectively utilizing a vehicle space of a four-wheel drive vehicle and also for achieving a weight reduction in a vehicle. It is also suited for automatically performing switching between a high speed and a low speed and also switching between a two-wheel drive and a four-wheel drive, so that a four-wheel drive vehicle can be adequately driven by simple operation. Four-wheel drive vehicles capable of obtaining high running performance by a four-wheel drive can be widely popularized.

**Claims**

1. A transfer construction having a primary output member (5) for outputting drive force to one of a front-wheel-side rotating member and a rear-wheel-side rotating member and a secondary output member (6) for outputting drive force to the other one of said front-wheel-side rotating member and said rear-wheel-side rotating member, thereby distributing drive force transmitted from an input member (4) to said primary output member (5) and said secondary output member (6), and in which said construction is provided with:

   a compound planetary gear mechanism (18,38A,38B, 48A,48B) having four rotatable elements capable of serving as drive force transferring elements or reaction force elements;
   individual ones of said four elements are arranged for couplement to individual ones of four members composed of said input member (4) said primary output member (5), said secondary output member (6) and a stationary member (27) arranged on a side of a transfer casing, respectively; and
   a first engagement member (28) interposed between one of said elements of said compound planetary gear mechanism (18,38A,38B,48A,48B) and said stationary member (27) to decelerate rotation transmitted from said input member (4); characterised by:
   a second engagement member (29,59) interposed between said primary output member (5) or secondary output member (6) and one of said elements of said compound planetary gear mechanism (18,38A,38B,48A,48B) so that said second engagement member (29,59) can be changed over between a state in which said second engagement member transfers said drive force to said primary output member (5) or said secondary output member (6) and another state in which said second engagement member does not transfer said drive force to said primary output member (5) or said secondary output member (6); and
   a third engagement member (33) interposed between said first primary member (5) and said secondary output member (6) so that said primary output member (5) and said secondary output member (6) can be selectively brought into a lock mode, a slip transfer mode or a free mode.

2. A transfer construction according to claim 1, wherein said compound planetary gear mechanism (18) comprises:

   a ring gear (19), a primary sun gear (22), a primary pinion gear (20) in meshing engagement with said ring gear (19), a secondary pinion gear (21) in meshing engagement with said primary pinion gear (20) and said primary sun gear (22), a secondary sun gear (23) in meshing engagement with said primary pinion gear (20) and a carrier (24) rotatably supporting thereon said primary pinion gear (20) and said secondary pinion gear (21); and
   individual ones of four elements composed of said ring gear (19), said primary sun gear (22), said secondary sun gear (23) and said carrier (24) are arranged for couplement to individual ones of four members composed of said input member (4), said primary output member (5), said secondary output member (6) and said stationary member (27), respectively.

3. A transfer construction according to claim 2, wherein said ring gear (19) and said input member (4) are arranged for couplement to each other, said primary sun gear (22) and said primary output member (5) are arranged for couplement to each other, said secondary sun gear (23) and said stationary member (27) are arranged for couplement to each other, and said carrier (24) and said secondary output member (6) are arranged for couplement to each other.

4. A transfer construction according to claim 3, wherein said second and first engagement members (29,28) are interposed between said primary sun gear (22) and said primary output member (5) and between said secondary sun gear (23) and said stationary member (27), respectively.

5. A transfer construction according to claim 4, wherein said primary output member is constructed as a front-wheel-side output member provided with a front drive sprocket (30) arranged coaxially with said compound planetary gear mechanism (18), a front propeller shaft (5) for transferring drive force to a side of front wheels, a front driven sprocket (32) arranged on said front propeller shaft (5), and a front drive chain (31) coupling said front drive sprocket (30) to said front driven sprocket (32) to permit transfer of power; and

said front drive sprocket (30), said front driven sprocket (32) and said front drive chain (31) are arranged closer to a rear part of a vehicle than said compound planetary gear mechanism (18) and said second and first engagement members (29,28).

6. A transfer construction according to claim 4, wherein said second and first engagement members (29,28) are wet-type multiplate clutches.

7. A transfer construction according to claim 2, wherein said ring gear (19) and said secondary output member (6) are arranged for couplement to each other, said primary sun gear (22) and said stationary member (27) are arranged for couplement to each other, said secondary sun gear (23) and said primary output member (5) are arranged for couplement to each other, and said carrier (24) and said input member (4) are arranged for couplement to each other.

8. A transfer construction according to claim 7, wherein said second and first engagement members (29,28) are interposed between said secondary sun gear (23) and said primary output member (5) and between said primary sun gear (22) and said stationary member (27), respectively.

9. A transfer construction according to claim 8, wherein said second and first engagement members (29,28) are wet-type multiplate clutches.

10. A transfer construction according to claim 1, wherein said composite planetary gear mechanism (38A,38B) comprises:

a primary planetary gear mechanism (38A) comprising three elements composed of a primary ring gear (39A), a primary sun gear (42A), and a primary carrier (44A) rotatably supporting thereon a primary pinion gear (40A) in meshing engagement with said primary ring gear (39A) and said primary sun gear (42A); and

a secondary planetary gear mechanism (38B) comprising three elements of a secondary ring gear (39B), a secondary sun gear (42B), and a secondary carrier (44B) rotatably supporting thereon a secondary pinion gear (40B) in meshing engagement with said secondary ring gear (39B) and said secondary sun gear (42B), in which two of said three elements are coupled to two of said three elements of said primary planetary gear mechanism (38A), respectively; and

individual ones of four elements, which are composed of said mutually coupled two elements, the remaining one element out of said three elements of said primary planetary gear mechanism (38A) and the remaining one element out of said three elements of said secondary planetary gear mechanism (38B), are arranged for couplement to individual ones of four members composed of said input member (4), said primary output member (5), said secondary output member (6) and said stationary member (27), respectively.

11. A transfer construction according to claim 10, wherein said primary ring gear (39A) and said secondary carrier (44B) are coupled to each other, and said secondary ring gear (39B) and said primary carrier (44A) are coupled to each other.

12. A transfer construction according to claim 11, wherein said secondary ring gear (39B) and said primary carrier (44A) are coupled to said input member (4); and

said primary sun gear (42A) and said primary output member (5) are arranged for couplement to each other, said secondary sun gear (42B) and said stationary member (27) are arranged for couplement to each other, and said primary ring gear (39A) and said secondary carrier (44B) are arranged for couplement to said secondary output member (6).

**13.** A transfer construction according to claim 12, wherein second and first engagement members (29,28) are interposed between said primary sun gear (42A) and said primary output member (5) and between said primary ring gear (39A) and said secondary carrier (44B), respectively.

**14.** A transfer construction according to claim 13, wherein said second and first engagement members (29,28) are wet-type multiplate clutches.

**15.** A transfer construction according to claim 1, wherein said third engagement member (33) is a wet-type multiplate clutch.

**16.** A transfer construction according to claim 1, wherein said primary output member (5) outputs drive force to said front-wheel-side rotating member.

**17.** A transfer construction according to claim 1, wherein said primary output member (5) outputs drive force to said rear-wheel-side rotating member.

**18.** A transfer construction according to claim 2, wherein said composite planetary gear mechanism (18) is provided additionally with a fourth engagement member (34) for fixing a differential function of said composite planetary gear mechanism (18).

**19.** A transfer construction according to claim 18, wherein said fourth engagement member (34) is interposed between said primary sun gear (22) and said secondary sun gear (23).

**20.** A transfer construction according to claim 10, wherein said composite planetary gear mechanism (38A,38B) is provided additionally with a fourth engagement member (34) for fixing a differential function of said composite planetary gear mechanism 18.

**21.** A transfer construction according to claim 20, wherein said fourth engagement member (34) is interposed between said primary carrier (44A) and said primary sun gear (42A).

**22.** A transfer construction according to claim 1, wherein said composite planetary gear mechanism (48A,48B) comprises:

> a primary planetary gear mechanism (48A) comprising three elements composed of a primary ring gear (49A), a primary sun gear (52A), and a primary carrier (54A) rotatably supporting thereon a primary pinion gear (50A) in meshing engagement with said primary ring gear (49A) and said primary sun gear (52A), and
> a secondary planetary gear mechanism (48B) comprising three elements of a secondary ring gear (49B), a secondary sun gear (52B), and a secondary carrier (54B) rotatably supporting thereon a secondary pinion gear (50B) in meshing engagement with said ring gear (49B) and a tertiary pinion gear (51B) in meshing engagement with said secondary pinion gear (50B) and said secondary sun gear (52B), in which two of said three elements are coupled to two of said three elements of said primary planetary gear mechanism (48A), respectively; and
> individual ones of four elements, which are composed of said mutually coupled two elements, the remaining one element out of said three elements of said primary planetary gear mechanism (48A) and the remaining one element out of said three elements of said secondary planetary gear mechanism (48B), are arranged for couplement to individual ones of four members composed of said input member (4), said primary output member (5), said secondary output member (6) and said stationary member (27), respectively.

**23.** A transfer construction according to claim 22, wherein said primary ring gear (49A) and said secondary sun gear (52B) are coupled to each other, and said primary sun gear (52A) and said secondary carrier (54B) are coupled to each other.

**24.** A transfer construction according to claim 23, wherein said primary sun gear (52A) and secondary sun gear (52B) and said input member (4) are coupled to each other; and

said primary ring gear (49A) and secondary sun gear (52A) and said primary output member (5) are arranged for couplement to each other, said primary carrier (54A) and said stationary member (27) are arranged for couplement to each other, and said secondary ring gear (49B) and said secondary output member (6) are arranged for couplement to each other.

25. A transfer construction according to claim 24, wherein said third and first engagement members (33,28) are interposed between said secondary ring gear (49B) and said secondary output member (6) and between said primary carrier (54A) and said stationary member (27), respectively.

26. A transfer construction according to claim 25, wherein said third and first engagement members (33,28) are wettype multiplate clutches.

27. A transfer construction according to claim 22, wherein said primary carrier (54A) and said secondary carrier (54B) are coupled to each other, and said primary ring gear (49A) and said secondary ring gear (49B) are coupled to each other.

28. A transfer construction according to claim 27, wherein said primary carrier (54A) and secondary carrier (54B) and said input member (4) are coupled to each other; and

said secondary sun gear (52B) and said primary output member (5) are arranged for couplement to each other, said primary sun gear (52A) and said stationary member (27) are arranged for couplement to each other, and said primary ring gear (49A) and secondary ring gear (49B) and said secondary output member (6) are arranged for couplement to each other.

29. A transfer construction according to claim 28, wherein said third and first engagement members (33,28) are interposed between said primary sun gear (52A) and said primary output member (5) and between said secondary sun gear (52B) and said stationary member (27), respectively.

30. A transfer construction according to claim 29, wherein said third and first engagement members (33,28) are wettype multiplate clutches.

31. A transfer construction according to claim 22, wherein said composite planetary gear mechanism (48A,48B) is provided additionally with a fourth engagement member (34) for fixing a differential function of said composite planetary gear mechanism (48A,48B).

32. A transfer construction according to claim 31, wherein said fourth engagement member (34) is interposed between said primary carrier (53A) and said primary sun gear (52A).

**Patentansprüche**

1. Aufbau eines Verteilergetriebes mit einem ersten Ausgabeglied (5) zum Ausgeben von Antriebskraft an eines von einem Vorderrad-Drehglied und einem Hinterrad-Drehglied und einem zweiten Ausgabeglied (6) zum Ausgeben von Antriebskraft an das andere von Vorderrad-Drehglied und Hinterrad-Drehglied, wodurch von einem Eingabeglied (4) übertragene Antriebskraft auf das erste Ausgabeglied (5) und das zweite Ausgabeglied (6) verteilt wird, und wobei der Aufbau versehen ist mit:

einem zusammengesetzten Planetengetriebemechanismus (18, 38A, 38B, 48A, 48B) mit vier drehbaren Elementen, die fähig sind, als Antriebskraft übertragende Elemente oder Gegenkraftelemente zu dienen, einzelne der vier Elemente sind zur Kopplung an einzelne der vier Glieder angeordnet, die aus dem Eingabeglied (4), dem ersten Ausgabeglied (5), dem zweiten Ausgabeglied (6) und einem stationären Glied (27) bestehen, die jeweils auf einer Seite eines Verteilergetriebes angeordnet sind, und einem ersten Eingriffsglied (28), das zwischen eines der Elemente des zusammengesetzten Planetengetriebemechanismus (18, 38A, 38B, 48A, 48B) und das stationäre Glied (27) gesetzt ist, um eine von dem Eingabeglied (4) übertragene Drehung zu verzögern, gekennzeichnet durch: ein zweites Eingriffsglied (29, 59), das zwischen das erste Ausgabeglied (5) oder das zweite Ausgabeglied (6) und eines der Elemente des zusammengesetzten Planetengetreibemechanismus (18, 38A, 38B, 48A, 48B) gesetzt ist, so daß das zweite Eingriffsglied (29, 59) zwischen einem Zustand, in dem das zweite Eingriffsglied die Antriebskraft zum ersten Ausgabeglied (5) oder dem zweiten Ausgabeglied (6) überträgt, und einem anderen Zustand umgeschaltet werden kann, in dem das zweite Eingriffsglied die Antriebskraft nicht an das erste Ausgabeglied (5) oder das zweite Ausgabeglied (6) überträgt, und

ein drittes Eingriffsglied (33), das zwischen das erste erste Glied (5) und das zweite Ausgabeglied (6) gesetzt ist, so daß das erste Ausgabeglied (5) und das zweite Ausgabeglied (6) selektiv in einen Sperrmodus, einen Schlupfübertragungsmodus oder einen freien Modus gebracht werden kann.

2. Aufbau eines Verteilergetriebes nach Anspruch 1, bei dem der zusammengesetzte Planetengetriebemechanismus (18) umfaßt:

ein Hohlrad (19), ein erstes Sonnenrad (22) ein erstes Ausgleichsrad (20) in Radeingriff mit dem Hohlrad (19), ein zweites Ausgleichsrad (21) in Radeingriff mit dem ersten Ausgleichsrad (20) und dem ersten Sonnenrad (22), ein zweites Sonnenrad (23) in Radeingriff mit dem ersten Ausgleichsrad (20) und einen Träger (24), der darauf drehbar das erste Ausgleichsrad (20) und das zweite Ausgleichsrad (21) trägt, und

einzelne von vier Elementen, die aus dem Hohlrad (19), dem ersten Sonnenrad (22), dem zweiten Sonnenrad (23) und dem Träger (24) bestehen, zur Kopplung an einzelne von vier Gliedern angeordnet sind, die aus dem Eingabeglied (4), dem ersten Ausgabeglied (5), dem zweiten Ausgabeglied (6) bzw. dem stationären Glied (27) bestehen.

3. Aufbau eines Verteilergetriebes nach Anspruch 2, bei dem das Hohlrad (19) und das Eingabeglied (4) zur Kopplung aneinander angeordnet sind, das erste Sonnenrad (22) und das erste Ausgabeglied (5) zur Kopplung aneinander angeordnet sind, das zweite Sonnenrad (23) und das stationäre Glied (27) zur Kopplung aneinander angeordnet sind und der Träger (24) und das zweite Ausgabeglied (6) zur Kopplung aneinander angeordnet sind.

4. Aufbau eines Verteilergetriebes nach Anspruch 3, bei dem die zweiten und ersten Eingriffsglieder (29, 28) zwischen das erste Sonnenrad (22) und das erste Ausgabeglied (5) bzw. zwischen das zweite Sonnenrad (23) und das stationäre Glied (27) gesetzt sind.

5. Aufbau eines Verteilergetriebes nach Anspruch 4, bei dem das erste Ausgabeglied als Vorderrad-Ausgabeglied aufgebaut ist, das mit einem vorderen Antriebskettenrad (30), das koaxial zum zusammengesetzten Planetengetriebemechanismus (18) angeordnet ist, einer vorderen Propellerwelle (5) zum Übertragen von Antriebskraft auf eine Seite der Vorderräder, einem vorderen angetriebenen Kettenrad (32), das auf der vorderen Propellerwelle (5) angeordnet ist, und einer vorderen Antriebskette (31) versehen ist, die das vordere Antriebskettenrad (30) an das vordere angetriebene Kettenrad (32) koppelt, um eine Übertragung von Leistung zu gestatten, und

das vordere Antriebskettenrad (30), das vordere angetriebene Kettenrad (32) und die vordere Antriebskette (31) näher als der zusammengesetzte Planetengetriebemechanismus (18) und die zweiten und ersten Eingriffsglieder (29, 28) beim hinteren Teil eines Fahrzeugs angeordnet sind.

6. Aufbau eines Verteilergetriebes nach Anspruch 4, bei dem die zweiten und ersten Eingriffsglieder (29, 28) Naß-Mehrscheibenkupplungen sind.

7. Aufbau eines Verteilergetriebes nach Anspruch 2, bei dem das Hohlrad (19) und das zweite Ausgabeglied (6) zur Kopplung aneinander angeordnet sind, das erste Sonnenrad (22) und das stationäre Glied (27) zur Kopplung aneinander angeordnet sind, das zweite Sonnenrad (23) und das erste Ausgabeglied (5) zur Kopplung aneinander angeordnet sind und der Träger (24) und das Eingabeglied (4) zur Kopplung aneinander angeordnet sind.

8. Aufbau eines Verteilergetriebes nach Anspruch 7, bei dem die zweiten und ersten Eingriffsglieder (29, 28) zwischen das zweite Sonnenrad (23) und das erste Ausgabeglied (5) bzw. zwischen das erste Sonnenrad (22) und das stationäre Glied (27) gesetzt sind.

9. Aufbau eines Verteilergetriebes nach Anspruch 8, bei dem die zweiten und ersten Eingriffsglieder (29, 28) Naß-Mehrscheibenkupplungen sind.

10. Aufbau eines Verteilergetriebes nach Anspruch 1, bei dem der zusammengesetzte Planetengetriebemechanismus (38A, 38B) umfaßt:

einen ersten Planetengetriebemechanismus (38A), der drei Elemente umfaßt, die aus einem ersten Hohlrad (39A), einem ersten Sonnenrad (42A) und einem ersten Träger (44A) besteht, der darauf drehbar ein erstes Ausgleichsrad (40A) in Radeingriff mit dem ersten Hohlrad (39A) und dem erste Sonnenrad (42A) trägt, und einen zweiten Planetengetriebemechanismus (38B), der drei Elemente von einem zweiten Hohlrad (39B), einem zweiten Sonnenrad (42B) und einem zweiten Träger (44B) umfaßt, der darauf drehbar ein zweites Ausgleichsrad (40B) in Radeingriff mit dem zweiten Hohlrad (39B) und dem zweiten Sonnenrad (42B) trägt, wobei zwei der drei Elemente entsprechend an zwei der drei Elemente des ersten Planetengetriebemechanismus (38A) gekoppelt sind, und

einzelne von vier Elementen, die aus zwei wechselseitig gekoppelten Elementen bestehen, wobei das verbleibende Element von den drei Elementen des primären Planetengetriebemechanismus (38A) und das verbleibende Element von den drei Elementen des zweiten Planetengetriebemechanismus (38B) zur Kopplung an einzelne von vier Elementen angeordnet sind, die aus dem Eingabeglied (4), dem ersten Ausgabeglied (5), dem zweiten Ausgabeglied (6) bzw. dem stationären Element (27) bestehen.

11. Aufbau eines Verteilergetriebes nach Anspruch 10, bei dem das erste Hohlrad (39A) und der zweite Träger (44B) aneinander gekoppelt sind und das zweite Hohlrad (39B) und der erste Träger (44A) aneinander gekoppelt sind.

12. Aufbau eines Verteilergetriebes nach Anspruch 11, bei dem das zweite Hohlrad (39B) und der erste Träger (44A) an das Eingabeglied (4) gekoppelt sind und das erste Sonnenrad (42A) und das erste Ausgabeglied (5) zur Kopplung aneinander angeordnet sind, das zweite Sonnenrad (42B) und das stationäre Glied (27) zur Kopplung aneinander angeordnet sind, und das erste Hohlrad (39A) und der zweite Träger (44B) zur Kopplung an das zweite Ausgabeglied (6) angeordnet sind.

13. Aufbau eines Verteilergetriebes nach Anspruch 12, bei dem die zweiten und ersten Eingriffsglieder (29, 28) zwischen das erste Sonnenrad (42A) und das erste Ausgabeglied (5) bzw. zwischen das erste Hohlrad (39A) und den zweiten Träger (44B) gesetzt sind.

14. Aufbau eines Verteilergetriebes nach Anspruch 13, bei dem die zweiten und ersten Eingriffsglieder (29, 28) Naß-Mehrscheibenkupplungen sind.

15. Aufbau eines Verteilergetriebes nach Anspruch 1, bei dem das dritte Eingriffsglied (33) eine Naß-Mehrscheibenkupplung ist.

16. Aufbau eines Verteilergetriebes nach Anspruch 1, bei dem das erste Ausgabeglied (5) Antriebskraft an das Vorderrad-Drehglied ausgibt.

17. Aufbau eines Verteilergetriebes nach Anspruch 1, bei dem das erste Ausgabeglied (5) Antriebskraft an das Hinterrad-Drehglied ausgibt.

18. Aufbau eines Verteilergetriebes nach Anspruch 2, bei dem der zusammengesetzte Planetengetriebemechanismus (18) zusätzlich mit einem vierten Eingriffsglied (34) zum Festlegen einer Differentialfunktion des zusammengesetzten Planetengetriebemechanismus (18) versehen ist.

19. Aufbau eines Verteilergetriebes nach Anspruch 18, bei dem das vierte Eingriffsglied (34) zwischen das erste Sonnenrad (22) und das zweite Sonnenrad (23) gesetzt ist.

20. Aufbau eines Verteilergetriebes nach Anspruch 10, bei dem der zusammengesetzte Planetengetriebemechanismus (38A, 38B) zusätzlich mit einem vierten Eingriffglied (34) zum Festlegen einer Differentialfunktion des zusammengesetzten Planetengetriebemechanismus (18) versehen ist.

21. Aufbau eines Verteilergetriebes nach Anspruch 20, bei dem das vierte Eingriffsglied (34) zwischen den ersten Träger (44A) und das erste Sonnenrad (42A) gesetzt ist.

22. Aufbau eines Verteilergetriebes nach Anspruch 1, bei dem der zusammengesetzte Planetengetriebemechanismus (48A, 48B) umfaßt:

einen esten Planetengetriebemechanismus (48A), der drei Elemente umfaßt, die aus einem ersten Hohlrad (49A), einem ersten Sonnenrad (52A) und einem ersten Träger (54A) bestehen, der darauf drehbar ein erstes Ausgleichsrad (50A) in Radeingriff mit dem ersten Hohlrad (49A) und dem ersten Sonnenrad (52A) trägt und einen zweiten Planetengetriebemechanismus (48B), der drei Elemente aus einem zweiten Hohlrad (49B), einem zweiten Sonnenrad (52B) und einem zweiten Träger (54B) umfaßt, der darauf drehbar ein zweites Ausgleichsrad (50B) in Radeingriff mit dem Hohlrad (49B) und ein drittes Ausgleichsrad (51B) in Radeingriff mit dem zweiten Ausgleichsrad (50B) und dem zweiten Sonnenrad (52B) trägt, wobei zwei der drei Elemente entsprechend an zwei der drei Elemente des ersten Planetengetriebemechanismus (48A) gekoppelt sind, und einzelne von vier Elementen, die aus den beiden wechselseitig gekoppelten Elementen bestehen, wobei das verbleibende Element von den drei Elementen des ersten Planetengetriebemechanismus (48A) und das verbleibende Element von den drei Elementen des zweiten Planetengetriebemechanismus (48B) zur Kopplung an einzelne von vier Gliedern angeordnet sind, die aus dem Eingabeglied (4), dem ersten Ausgabeglied (5), dem zweiten Ausgabeglied (6) bzw. dem stationären Glied (27) bestehen.

23. Aufbau eines Verteilergetriebes nach Anspruch 22, bei dem das erste Hohlrad (49A) und das zweite Sonnenrad (52B) aneinander gekoppelt sind und das erste Sonnenrad (52A) und der zweite Träger (54B) aneinander gekoppelt sind.

24. Aufbau eines Verteilergetriebes nach Anspruch 23, bei dem das erste Sonnenrad (52A) und das zweite Sonnenrad (52B) und das Eingabeglied (4) aneinander gekoppelt sind, und das erste Hohlrad (49A) und das zweite Sonnenrad (52A) und das erste Ausgabeglied (5) zur Kopplung aneinander angeordnet sind, der erste Träger (54A) und das stationäre Element (27) zur Kopplung aneinander angeordnet sind und das zweite Hohlrad (49B) und das zweite Ausgabeglied (6) zur Kopplung aneinander angeordnet sind.

25. Aufbau eines Verteilergetriebes nach Anspruch 24, bei dem die dritten und ersten Eingriffsglieder (33, 28) zwischen das zweite Hohlrad (49B) und das zweite Ausgabelied (6) bzw. zwischen den ersten Träger (54A) und das stationäre Glied (27) gesetzt sind.

26. Aufbau eines Verteilergetriebes nach Anspruch 25, bei dem die dritten und ersten Eingriffslieder (33, 28) Naß-Mehrscheibenkupplungen sind.

27. Aufbau eines Verteilergetriebes nach Anspruch 22, bei dem der erste Träger (54A) und der zweite Träger (54B) aneinander gekoppelt sind und das erste Hohlrad (49A) und das zweite Hohlrad (49B) aneinander gekoppelt sind.

28. Aufbau eines Verteilergetriebes nach Anspruch 27, bei dem der erste Träger (54A) und der zweite Träger (54B) und das Eingabeglied (4) aneinander gekoppelt sind und das zweite Sonnenrad (52B) und das erste Ausgabeglied (5) zur Kopplung aneinander angeordnet sind, das erste Sonnenrad (52A) und das stationäre Glied (27) zur Kopplung aneinander angeordnet sind und das erste Hohlrad (49A) und das zweite Hohlrad (49B) und das zweite Ausgabeglied (6) zur Kopplung aneinander angeordnet sind.

29. Aufbau eines Verteilergetriebes nach Anspruch 28, bei dem die dritten und ersten Eingriffsglieder (33, 28) zwischen das erste Sonnenrad (52A) und das erste Ausgabeglied (5) bzw. zwischen das zweite Sonnenrad (52B) und das stationäre Glied (27) gesetzt sind.

30. Aufbau eines Verteilergetriebes nach Anspruch 29, bei dem die dritten und ersten Eingriffsglieder (33, 28) Naß-Mehrscheibenkupplungen sind.

31. Aufbau eines Verteilergetriebes nach Anspruch 22, bei dem der zusammengesetzte Planetengetriebemechanismus (48A, 48B) zusätzlich mit einem vierten Eingriffsglied (34) zum Festlegen einer Differentialfunktion des zusammengesetzten Planetengetriebemechanismus (48A, 48B) versehen ist.

32. Aufbau eines Verteilergetriebes nach Anspruch 31, bei dem das vierte Eingriffsglied (34) zwischen den ersten Träger (53A) und das erste Sonnenrad (52A) gesetzt ist.

**Revendications**

1. Système de transfert possédant un organe de sortie primaire (5) destiné à appliquer une force motrice en sortie à l'un des deux suivants , un organe rotatif côté roues avant et un organe rotatif côté roues arrière, et un organe de sortie secondaire (6) destiné à appliquer une force motrice en sortie à l'autre dudit organe rotatif côté roues avant et dudit organe rotatif côté roues arrière en distribuant ainsi une force motrice transmise en provenance d'un organe d'entrée (4) audit organe de sortie primaire (5) et audit organe de sortie secondaire (6), et où ledit système est équipé de :

   un mécanisme à train épicycloïdal composite (18, 38A, 38B, 48A, 48B) ayant quatre éléments rotatifs capables de servir d'éléments de transfert de force motrice ou d'éléments de force de réaction ;

des éléments individuels desdits quatre éléments étant agencés pour être accouplés à des organes individuels des quatre organes composés dudit organe d'entrée (4), dudit organe de sortie primaire (5), dudit organe de sortie secondaire (6) et d'un organe stationnaire (27) agencé sur un côté d'un carter de transfert, respectivement ; et

un premier organe d'engagement (28) interposé entre un desdits éléments dudit mécanisme à train épicycloïdal composite (18, 38A, 38B, 48A, 48B) et ledit organe stationnaire (27) pour décélérer la rotation transmise en provenance dudit organe d'entrée (4) ;

caractérisé par :

un deuxième organe d'engagement (29, 59) interposé entre ledit organe de sortie primaire (5) ou ledit organe de sortie secondaire (6) et un desdits éléments dudit mécanisme à train épicycloïdal composite (18, 38A, 38B, 48A, 48B), de sorte que ledit deuxième organe d'engagement (29, 59) peut être changée entre un état dans lequel ledit deuxième organe d'engagement transfère ladite force motrice audit organe de sortie primaire (5) ou audit organe de sortie secondaire (6) et un autre état dans lequel ledit deuxième organe d'engagement ne transfère pas ladite force motrice audit organe de sortie primaire (5) ou audit organe de sortie secondaire (6) ; et

un troisième organe d'engagement (33) interposé entre ledit premier organe primaire (5) et ledit organe de sortie secondaire (6), de sorte que ledit organe de sortie primaire (5) et ledit organe de sortie secondaire (6) peuvent être sélectivement placés dans un mode bloqué, un mode de transfert à glissement ou un mode libre.

2. Système de transfert selon la revendication 1, dans lequel ledit mécanisme à train épicycloïdal composite (18) comprend :

une couronne (19), une roue planétaire primaire (22), un pignon primaire (20) en prise avec ladite couronne (19), un pignon secondaire (21) en prise avec ledit pignon primaire (20) et avec ladite roue planétaire primaire (22), une roue planétaire secondaire (23) en prise avec ledit pignon primaire (20) et un porte-satellites (24) qui porte mobiles en rotation sur lui ledit pignon primaire (20) et ledit pignon secondaire (21) ; et

des éléments individuels des quatre éléments composés de ladite couronne (19), de ladite roue planétaire primaire (22), de ladite roue planétaire secondaire (23) et dudit porte-satellites (24) sont agencés pour être accouplés à des organes individuels des quatre organes composés dudit organe d'entrée (4), dudit organe de sortie primaire (5), dudit organe de sortie secondaire (6) et dudit organe stationnaire (27), respectivement.

3. Système de transfert selon la revendication 2, dans lequel ladite couronne (19) et ledit organe d'entrée (4) sont agencés pour être accouplés l'un à l'autre, ladite roue planétaire primaire (22) et ledit organe de sortie primaire (5) sont agencés pour être accouplés l'un à l'autre, ladite roue planétaire secondaire (23) et ledit organe stationnaire (27) sont agencés pour être accouplés l'un à l'autre, et ledit porte-satellites (24) et ledit organe de sortie secondaire (6) sont agencés pour être accouplés l'un à l'autre.

4. Système de transfert selon la revendication 3, dans lequel lesdits deuxième et premier organes d'engagement (29, 28) sont interposés entre ladite roue planétaire primaire (22) et ledit organe de sortie primaire (5) et entre ladite roue planétaire secondaire (23) et ledit organe stationnaire (27) respectivement.

5. Système de transfert selon la revendication 4, dans lequel ledit organe de sortie primaire est construit sous la forme d'un organe de sortie côté roues avant muni d'une roue à chaîne motrice avant (30) agencée coaxialement audit mécanisme à train épicycloïdal composite (18), d'un arbre de transmission avant (5) destiné à transmettre la force motrice à un côté des roues avant, d'une roue à chaîne entraînée (32) agencée sur ledit arbre de transmission avant (5), et d'une chaîne de transmission avant (31) qui accouple ladite roue à chaîne motrice avant (30) à ladite roue à chaîne entraînée avant (32) pour permettre le transfert de puissance ; et

ladite roue à chaîne motrice avant (30), ladite roue à chaîne entraînée avant (32) et ladite chaîne de transmission avant (31) sont agencées plus près d'une partie arrière d'un véhicule que ledit mécanisme à train épicycloïdal composite (18) et que lesdits deuxième et premier organes d'engagement (29, 28).

6. Système de transfert selon la revendication 4, dans lequel lesdits deuxième et premier organes d'engagement (29, 28) sont des embrayages multidisques du type humide.

7. Système de transfert selon la revendication 2, dans lequel ladite couronne (19) et ledit organe de sortie secondaire (6) sont agencés pour être accouplés l'un à l'autre, ladite roue planétaire primaire (22) et ledit organe stationnaire (27) sont agencés pour être accouplés l'un à l'autre, ladite roue planétaire secondaire (23) et ledit organe de sortie primaire (5) sont agencés pour être accouplés l'un à l'autre, et ledit porte-satellites (24) et ledit organe d'entrée (4) sont agencés pour être accouplés l'un à l'autre.

8. Système de transfert selon la revendication 7, dans lequel lesdits deuxième et premier organes d'engagement (29, 28) sont interposés entre ladite roue planétaire secondaire (23) et ledit organe de sortie primaire (5) et entre ladite roue planétaire primaire (22) et ledit organe stationnaire (27), respectivement.

9. Système de transfert selon la revendication 8, dans lequel lesdits deuxième et premier organes d'engagement (29, 28) sont des embrayages multidisques du type humide.

10. Système de transfert selon la revendication 1, dans lequel ledit mécanisme à train épicycloïdal composite (38A, 38B) comprend :

   un mécanisme à train épicycloïdal primaire (38A) comprenant trois éléments composés d'une couronne primaire (39A), d'une roue planétaire primaire (42A) et d'un porte-satellites primaire (44A) qui porte mobile en rotation sur lui un pignon primaire (40A) en prise avec ladite couronne primaire (39A) et avec ladite roue planétaire primaire (42A) ; et
   un mécanisme à train épicycloïdal secondaire (38B) comprenant trois éléments composés d'une couronne secondaire (39B), d'une roue planétaire secondaire (42B) et d'un porte-satellites secondaire (44B) qui porte rotatif sur lui un pignon secondaire (40B) en prise avec ladite couronne secondaire (39B) et avec ladite roue planétaire secondaire (42B), où deux desdits trois éléments sont accouplés à deux desdits trois éléments dudit mécanisme à train épicycloïdal primaire (38A), respectivement ; et
   des éléments individuels des quatre éléments, qui sont composés desdits deux éléments accouplés l'un à l'autre, l'élément restant desdits trois éléments dudit mécanisme à train épicycloïdal primaire (38A) et l'élément restant desdits trois éléments dudit mécanisme à train épicycloïdal secondaire (38B), sont agencés pour être accouplés à des organes individuels de quatre organes composés dudit organe d'entrée (4) dudit organe de sortie primaire (5), dudit organe de sortie secondaire (6) et dudit organe stationnaire (27), respectivement.

11. Système de transfert selon la revendication 10, dans lequel ladite couronne primaire (39A) et ledit porte-satellites secondaire (44B) sont accouplés l'un à l'autre, et ladite couronne secondaire (39B) et ledit porte-satellites primaire (44A) sont accouplés l'un à l'autre.

12. Système de transfert selon la revendication 11, dans lequel ladite couronne secondaire (39B) et ledit porte-satellites primaire (44A) sont accouplés audit organe d'entrée (4) ; et
   ladite roue planétaire primaire (42A) et ledit organe de sortie primaire (5) sont agencés pour être accouplés l'un à l'autre, ladite roue planétaire (42B) et ledit organe stationnaire (27) sont agencés pour être accouplés l'un à l'autre, et ladite couronne primaire (39A) et ledit porte-satellites secondaire (44B) sont agencés pour être accouplés audit organe de sortie secondaire (6).

13. Système de transfert selon la revendication 12, dans lequel des deuxième et premier organes d'engagement (29, 28) sont interposés entre ladite roue planétaire primaire (42A) et ledit organe de sortie primaire (5) et entre ladite couronne primaire (39A) et ledit porte-satellites secondaire (44B), respectivement.

14. Système de transfert selon la revendication 13, dans lequel lesdits deuxième et premier organes d'engagement (29,28) sont des embrayages multidisques du type humide.

15. Système de transfert selon la revendication 1, dans lequel ledit troisième organe d'engagement (33) est un embrayage multidisques du type humide.

16. Système de transfert selon la revendication 1, dans lequel ledit organe de sortie primaire (5) applique la force motrice en sortie audit organe rotatif côté roues avant.

17. Système de transfert selon la revendication 1, dans lequel ledit organe de sortie primaire (5) applique la force motrice en sortie audit organe rotatif côté roues arrière.

18. Système de transfert selon la revendication 2, dans lequel ledit mécanisme à train épicycloïdal composite (18) est muni en supplément d'un quatrième organe d'engagement (34) pour bloquer une fonction différentielle dudit mécanisme à train épicycloïdal composite (18).

**19.** Système de transfert selon la revendication 18, dans lequel ledit quatrième organe d'engagement (34) est interposé entre ladite roue planétaire primaire (22) et ladite roue planétaire secondaire (23).

**20.** Système de transfert selon la revendication 10, dans lequel ledit mécanisme à train épicycloïdal composite (38A, 38B) est équipé en supplément d'un quatrième organe d'engagement (34) pour bloquer une fonction différentielle dudit mécanisme à train épicycloïdal composite (18).

**21.** Système de transfert selon la revendication 20, dans lequel ledit quatrième organe d'engagement (34) est interposé entre ledit porte-satellites primaire (44A) et ladite roue planétaire primaire (42A).

**22.** Système de transfert selon la revendication 1, dans lequel ledit mécanisme à train épicycloïdal composite (48A, 48B) comprend :

un mécanisme à train épicycloïdal primaire (48A) comprenant trois éléments composés d'une couronne primaire (49A), d'une roue planétaire primaire (52A), et d'un porte-satellites primaire (54A) qui porte mobile en rotation sur lui un pignon primaire (50A) en prise avec ladite couronne primaire (49A) et avec ladite roue planétaire primaire (52A), et

un mécanisme à train épicycloïdal secondaire (48B) comprenant trois éléments composés d'une couronne secondaire (49B), d'une roue planétaire secondaire (52B), et d'un porte-satellites secondaire (54B) qui porte rotatifs sur lui un pignon secondaire (50B) en prise avec ladite couronne (49B) et un pignon tertiaire (51B) en prise avec ledit pignon secondaire (50B) et avec ladite roue planétaire secondaire (52B), dans lequel deux desdits trois éléments sont accouplés à deux desdits trois éléments dudit mécanisme à train épicycloïdal primaire (48A), respectivement ; et

des éléments individuels des quatre éléments, qui sont composés desdits deux éléments accouplés l'un à l'autre, l'élément restant desdits trois éléments dudit mécanisme à train épicycloïdal primaire (48A) et l'élément restant desdits trois éléments dudit mécanisme à train épicycloïdal secondaire (48B), sont agencés pour être accouplés à des organes individuels des quatre organes composés dudit organe d'entrée (4), dudit organe de sortie primaire (5), dudit organe de sortie secondaire (6) et dudit organe stationnaire (27), respectivement.

**23.** Système de transfert selon la revendication 22, dans lequel ladite couronne primaire (49A) et ladite roue planétaire secondaire (52B) sont accouplées l'une à l'autre, et ladite roue planétaire primaire (52A) et ledit porte-satellites secondaire (54B) sont accouplés l'un à l'autre.

**24.** Système de transfert selon la revendication 23, dans lequel ladite roue planétaire primaire (52A) et ladite roue planétaire secondaire (52B) et ledit organe d'entrée (4) sont accouplés l'un à l'autre ; et

ladite couronne primaire (49A) et ladite roue planétaire secondaire (52A) et ledit organe de sortie primaire (5) sont agencés pour être accouplés l'un à l'autre, ledit porte-satellites primaire (54A) et ledit organe stationnaire (27) sont agencés pour être accouplés l'un à l'autre, et ladite couronne secondaire (49B) et ledit organe de sortie secondaire (6) sont agencés pour être accouplés l'un à l'autre.

**25.** Système de transfert selon la revendication 24, dans lequel lesdits troisième et premier organes d'engagement (33, 28) sont interposés entre ladite couronne secondaire (49B) et ledit organe de sortie secondaire (6) et entre ledit porte-satellites primaire (54A) et ledit organe stationnaire (27), respectivement.

**26.** Système de transfert selon la revendication 25, dans lequel lesdits troisième et premier organes d'engagement (33, 28) sont des embrayages multidisques du type humide.

**27.** Système de transfert selon la revendication 22, dans lequel ledit porte-satellites primaire (54A) et ledit porte-satellites secondaire (54B) sont accouplés l'un à l'autre, et ladite couronne primaire (49A) et ladite couronne secondaire (49B) sont accouplées l'une à l'autre.

**28.** Système de transfert selon la revendication 27, dans lequel ledit porte-satellites primaire (54A) et ledit porte-satellites secondaire (54B) et ledit organe d'entrée (4) sont accouplés l'un à l'autre ; et

ladite roue planétaire secondaire (52B) et ledit organe de sortie primaire (5) sont agencés pour être accouplés l'un à l'autre, ladite roue planétaire primaire (52A) et ledit organe stationnaire (27) sont agencés pour être accouplés l'un à l'autre, et ladite couronne primaire (49A) et ladite couronne secondaire (49B) et ledit organe de sortie secondaire (6) sont agencés pour être accouplés l'un à l'autre.

**29.** Système de transfert selon la revendication 28, dans lequel lesdits troisième et premier organes d'engagement (33, 28) sont interposés entre ladite roue planétaire primaire (52A) et ledit organe de sortie primaire (5) et entre ladite roue planétaire secondaire (52B) et ledit organe stationnaire (27), respectivement.

**30.** Système de transfert selon la revendication 29, dans lequel lesdits troisième et premier organe d'engagement (33, 28) sont des embrayages multidisques du type humide.

**31.** Système de transfert selon la revendication 22, dans lequel ledit mécanisme à train épicycloïdal composite (48A, 48B) est équipé en supplément d'un quatrième organe d'engagement (34) pour bloquer une fonction différentielle dudit mécanisme à train épicycloïdal composite (48A, 48B).

**32.** Système de transfert selon la revendication 31, dans lequel ledit quatrième organe d'engagement (34) est interposé entre ledit porte-satellites primaire (53A) et ladite roue planétaire primaire (52A).

# F I G. 1

# F I G. 2

# FIG. 3

EP 0 684 153 B1

# FIG. 4

(1) 2WD

# FIG. 5

(2) HIGH-RANGE, CENTER-DIFFERETIAL-LIMITED
4WD/DIRECT 4WD

# FIG. 6

③ LOW RANGE, DIRECT 4WD

# FIG. 7

(A)

Ti

Tf
(OUTPUT TO FRONT)

Tr
(OUTPUT TO REAR)

(B)

Ti

Tf Tr

(C)

Ti

Tf

Tr

# FIG. 8

(A)

Ti

Tr(Tf)    Tf(Tr)

(B)

Ti

Tr  Tf

(C)

Ti

Tr(Tf)    Tf(Tr)

# FIG. 9

# FIG. 10

# FIG. 11

# FIG. 12

# FIG. 13

# FIG. 14

# FIG. 15

# FIG. 16

# FIG. 17

# F I G. 18

FIG. 19

# FIG. 20